# EUROPEAN PATENT APPLICATION

(11) **EP 4 554 283 A1**
(43) Date of publication of application: **14.05.2025**
(21) Application number: 23849023.9
(22) Date of filing: 30.05.2023
(51) Int. Cl.: H04W 36/06, H04W 40/22

(54) **COMMUNICATION METHOD AND APPARATUS, AND DEVICE**

(30) Priority: 04.08.2022 CN 202210933680
(71) Applicant: Huawei Technologies Co., Ltd., Shenzhen, Guangdong 518129 (CN)
(72) Inventor: XU, Ruixiong, Shenzhen, Guangdong 518129 (CN); PENG, Wenjie, Shenzhen, Guangdong 518129 (CN)
(74) Representative: Gill Jennings & Every LLP
(86) International application number: PCT/CN2023/097120
(87) International publication number: WO 2024/027313

(57) **Abstract**

A communication method and apparatus, and a device are provided. The method is as follows: After determining whether each terminal device in a first set can communicate with a first relay device, the first relay device may send, to a first terminal device, second indication information indicating a second set, where the second set includes a terminal device that is in the first set and that can communicate with the first relay device. According to the method, accuracy of information sent by the first relay device may be improved. In this way, the first terminal device can select, based on the accurate second indication information, the first relay device to perform communication between terminal devices, so that communication quality between the terminal devices can be improved.

## Description

### CROSS-REFERENCE TO RELATED APPLICATIONS

This application claims priority to Chinese Patent Application No. 202210933680.7, filed with the China National Intellectual Property Administration on August 4, 2022 and entitled "COMMUNICATION METHOD AND APPARATUS, AND DEVICE", which is incorporated herein by reference in its entirety.

### TECHNICAL FIELD

This application relates to the communication field, and in particular, to a communication method and apparatus, and a device.

### BACKGROUND

In a communication system, terminal devices may communicate with each other. For example, the terminal devices may communicate with each other through a sidelink (sidelink). The terminal devices may directly communicate with each other, or may communicate with each other via a relay device to improve sidelink coverage enhancement.

Currently, to enable the terminal devices to communicate with each other via the relay device, the relay device may periodically broadcast a list of terminal devices that can communicate with the relay device. In this way, a terminal device may select, based on the list, an appropriate relay device for communication. For example, a terminal device 1 receives a terminal device list 1 from a relay device 1, and the terminal device list 1 includes a terminal device 2 and a terminal device 3. When the terminal device 1 needs to communicate with the terminal device 2, the terminal device 1 may communicate with the terminal device 2 via the relay device 1.

However, due to mobility of the terminal device or other reasons, a relay device selected by the terminal device based on the list may not be the appropriate relay device. Consequently, communication quality between the terminal devices is poor, and even the communication is interrupted.

### SUMMARY

This application provides a communication method and apparatus, and a device, to improve communication quality between terminal devices.

According to a first aspect, an embodiment of this application provides a communication method. The method includes: A first relay device may obtain first indication information indicating a first set, where the first set includes at least one terminal device. After determining whether each terminal device in the first set can communicate with the first relay device, the first relay device may send, to a first terminal device, second indication information indicating a second set, where the second set includes a terminal device that is in the first set and that can communicate with the first relay device.

According to the method, after checking whether all terminal devices in the first set can communicate with the first relay device, the first relay device sends the second indication information, to indicate the second set including a terminal device that can communicate with the first relay device, so that accuracy of information sent by the first relay device is improved. In this way, the first terminal device can select, based on the accurate second indication information, the first relay device to perform communication between terminal devices, so that communication quality between the terminal devices can be improved.

In a possible design, the first relay device may determine, by using the following steps, whether each terminal device in the first set can communicate with the first relay device: If a first message is received from a second terminal device, the first relay device may determine that the second terminal device can communicate with the first relay device. If no first message is received from a second terminal device, the first relay device may determine that the second terminal device cannot communicate with the first relay device, where the second terminal device is any terminal device in the first set. By using this design, whether each terminal device in the first set can communicate with the first relay device may be conveniently determined. This is easy to implement.

In a possible design, the first message is at least one of the following:
an announcement message sent by the second terminal device, where the announcement message is used by a communication device other than the second terminal device to discover the second terminal device; and
a response message sent by the second terminal device, where the response message is used to respond to a solicitation message or a direct communication request sent by the first relay device, the solicitation message is used by a communication device other than the first relay device to discover the first relay device, and the direct communication request is used to request to establish a connection between the first relay device and the second terminal device.

This design provides a plurality of implementations of the first message, and is flexible.

**In** a possible design, the first relay device sends, to the first terminal device in a first time period after whether each terminal device in the first set can communicate with the first relay device is determined, the second indication information indicating the second set. By using this design, the first relay device may send, to the first terminal device in the first time period in which that the first relay device can communicate with each terminal device in the second set is determined, the indication information indicating the second set, so that accuracy of the indication information of the second set can be improved.

**In** a possible design, each terminal device in the second set has a capability of communicating with a terminal device via a relay device. By using this design, the first relay device may further limit a terminal device in the second set, so that signaling overheads can be reduced, and transmission resources can be saved. In addition, each terminal device in the second set has a capability of communicating with a terminal device via a relay device, so that the first terminal device can be prevented from requesting to communicate, via the relay device, with a terminal device that does not have the capability. In this way, communication quality and communication efficiency can be further improved.

In a possible design, before sending, to the first terminal device, the second indication information indicating the second set, the first relay device may obtain capability indication information of each terminal device in the first set, where the capability indication information of each terminal device in the first set indicates whether each terminal device has a capability of communicating with a terminal device via a relay device. By using this design, the first relay device may learn of, in a timely manner, whether the terminal device has a capability of communicating with a terminal device via a relay device. This is easy to implement.

In a possible design, signal quality between each terminal device in the second set and the first relay device is greater than or equal to a first threshold. By using this design, the first relay device may further limit the terminal device in the second set, so that the signaling overheads can be reduced, and the transmission resources can be saved. In addition, the signal quality between each terminal device in the second set and the first relay device is greater than or equal to the first threshold. In this way, when the first terminal device communicates with another terminal device via the first relay device, the communication quality can be ensured.

In a possible design, the signal quality between each terminal device in the second set and the first relay device is greater than or equal to the first threshold and less than a second threshold, and the second threshold is greater than the first threshold. By using this design, the first relay device may further limit the terminal device in the second set, so that the signaling overheads can be reduced, and the transmission resources can be saved. In addition, the signal quality between each terminal device in the second set and the first relay device is greater than or equal to the first threshold. In this way, when the first terminal device communicates with the another terminal device via the first relay device, the communication quality can be ensured. In addition, the signal quality between each terminal device in the second set and the first relay device is less than the second threshold, so that a terminal device in proximity to the first relay device can be removed, thereby further improving the communication efficiency between the terminal devices.

In a possible design, after determining whether each terminal device in the first set can communicate with the first relay device, the first relay device may further send information indicating the signal quality between each terminal device in the second set and the first relay device. By using this design, the first relay device may send the information indicating the signal quality between each terminal device in the second set and the first relay device. In this way, when the terminal device in the second set is to select a relay device to perform data transmission, the terminal device may select the relay device based on signal quality between the first relay device and a target terminal device, so that the communication quality between the terminal devices can be improved.

In a possible design, the first indication information includes indication information of each terminal device in the first set, and the second indication information includes indication information of each terminal device in the second set. The design is easy to implement.

According to a second aspect, an embodiment of this application provides a communication method. The method includes: A first terminal device determines whether a direct link can be established between the first terminal device and a third terminal device. If determining that the direct link cannot be established between the first terminal device and the third terminal device, the first terminal device may select, based on first information, a first relay device from M relay devices that can communicate with the third terminal device, and send, to the first relay device, a service data packet to be sent to the third terminal device. The first information may include signal quality between each of the M relay devices and the first terminal device. M is a positive integer.

According to the method, after determining that the direct link cannot be established between the first terminal device and the third terminal device, the first terminal device then selects a relay device to perform transmission of the service data packet. In other words, the first terminal device preferentially selects the direct link between the first terminal device and the third terminal device to perform the transmission of the service data packet. In this way, a transmission delay of the service data packet can be reduced.

In addition, the first terminal device may select the first relay device based on the signal quality between each of the M relay devices and the first terminal device, and send the service data packet to the third relay device via the first relay device, so that communication quality between terminal devices can be improved.

In a possible design, if determining that the direct link can be established between the first terminal device and the third terminal device, the first terminal device may send the service data packet to the third terminal device through the direct link between the first terminal device and the third terminal device. By using this design, the first terminal device may preferentially select the direct link between the first terminal device and the third terminal device to perform the transmission of the service data packet, so that the transmission delay of the service data packet can be reduced.

In a possible design, the first terminal device may determine, by using the following steps, whether the direct link can be established between the first terminal device and the third terminal device: When signal quality of a second message from the third terminal device is less than a fifth threshold, the first terminal device may determine that the direct link cannot be established between the first terminal device and the third terminal device. When signal quality of a second message from the third terminal device is greater than or equal to a fifth threshold, the first terminal device may determine that the direct link can be established between the first terminal device and the third terminal device. The design is easy to implement.

In a possible design, signal quality between the first relay device and the first terminal device is greater than or equal to a third threshold; and/or the first relay device is a relay device that is in the M relay devices and that has highest signal quality with the first terminal device. By using this design, the first terminal device may select, based on signal quality between a relay device and the first terminal device, the first relay device whose signal quality meets the foregoing condition to perform the transmission of the service data packet, so that the communication quality can be ensured.

**In** a possible design, the first information further includes signal quality between each of the M relay devices and the third terminal device. The first relay device meets one of the following conditions:
the signal quality between the first relay device and the first terminal device is greater than or equal to the third threshold, and signal quality between the first relay device and the third terminal device is greater than or equal to a fourth threshold;
the first relay device is the relay device that is in the M relay devices and that has highest signal quality with the first terminal device, and signal quality between the first relay device and the third terminal device is greater than or equal to a fourth threshold;
the signal quality between the first relay device and the first terminal device is greater than or equal to the third threshold, and the first relay device is a relay device that is in the M relay devices and that has highest signal quality with the third terminal device; or
the first relay device is the relay device that is in the M relay devices and that has highest signal quality with the first terminal device, and the first relay device is a relay device that is in the M relay devices and that has highest signal quality with the third terminal device.

By using this design, the first terminal device may select, based on the signal quality between the relay device and the first terminal device and signal quality between the relay device and the third terminal device, the first relay device configured to perform the transmission of the service data packet, so that the communication quality can be ensured.

In a possible design, before selecting, based on the first information, the first relay device from the M relay devices that can communicate with the third terminal device, the first terminal device may separately receive signal quality indication information from each of the M relay devices, where the signal quality indication information from each of the M relay devices indicates the signal quality between each relay device and the third terminal device. By using this design, the first terminal device may determine the signal quality between each relay device and the third terminal device. This is easy to implement.

In a possible design, the first information further includes a connection status between each of the M relay devices and the first terminal device, and a unicast connection has been established between the first relay device and the first terminal device. By using this design, the first terminal device preferentially selects the first relay device that has established the unicast connection to the first terminal device, to perform the transmission of the service data packet. **In** this way, the first terminal device does not need to establish the unicast connection again, so that the transmission delay can be reduced.

In a possible design, before selecting, based on the first information, the first relay device from the M relay devices that can communicate with the third terminal device, the first terminal device may separately receive indication information from each of N relay devices, where the indication information from each of the N relay devices indicates at least one terminal device that can communicate with each relay device, and N is a positive integer. Then, the first terminal device may determine, based on indication information from the N relay devices, the M relay devices that are in the N relay devices and that can communicate with the third terminal device. By using this design, in this way, the first terminal device can conveniently determine the M relay devices that can communicate with the third terminal device.

In a possible design, when the first terminal device fails to select the first relay device from the M relay devices based on the first information, the first terminal device may send a third message to the third terminal device, where the third message is used to request to establish the direct link between the first terminal device and the third terminal device. By using this design, when the direct link between the first terminal device and the third terminal device does not meet a signal quality requirement, and the first terminal device fails to find the first relay device based on the first information, in other words, when the first terminal device also fails to find an indirect path that meets the signal quality requirement, the first terminal device may communicate with the third terminal device through the direct link, so that communication complexity and signaling overheads can be reduced.

In a possible design, when a connection between the first terminal device and a second relay device is interrupted, or a connection between the third terminal device and a second relay device is interrupted, the first terminal device may select, based on the first information, the first relay device from the M relay devices that can communicate with the third terminal device. **In** this way, in a re-selection procedure, the first terminal device may select a relay device based on signal quality, so that communication quality during the transmission of the service data packet via the relay device can be ensured.

In a possible design, before selecting, based on the first information, the first relay device from the M relay devices that can communicate with the third terminal device, when the connection between the first terminal device and the second relay device is interrupted, or the connection between the third terminal device and the second relay device is interrupted, the first terminal device may release a first connection between the first terminal device and the third terminal device, where the first connection is an end-to-end connection between the first terminal device and the third terminal device. In this way, when the connection between the first terminal device and the second relay device is interrupted, or the connection between the third terminal device and the second relay device is interrupted, the first terminal device or the third terminal device may release a connection between the first terminal device and the third terminal device in a timely manner, so that unnecessary occupation of resources is avoided.

According to a third aspect, an embodiment of this application provides a communication method. The method includes: After sending third indication information to a first terminal device, a first relay device may receive a service data packet of a target service from the first terminal device. The third indication information indicates at least one service, a service data packet of each of the at least one service is a service data packet that at least one terminal device that can communicate with the first relay device expects to receive, and the at least one service includes the target service. Then, the first relay device may send the service data packet of the target service to a third terminal device, where the third terminal device is a terminal device that is in P terminal devices that can communicate with the first relay device and that expects to receive the service data packet of the target service, and P is a positive integer.

According to the method, the first relay device may send the third indication information indicating the at least one service, and the service data packet of each of the at least one service is the service data packet that the at least one terminal device that can communicate with the first relay device expects to receive. When the first terminal device is to send the service data packet of the target service, the first terminal device may find, based on the third indication information, an appropriate relay device, to forward the service data packet of the target service to a terminal device that expects to receive the service data packet of the target service, so that correct transmission of the service data packet can be ensured.

In a possible design, before receiving the service data packet of the target service from the first terminal device, the first relay device may receive a first request from the first terminal device, where the first request is used to request to establish a unicast connection between the first relay device and the first terminal device, and the first request includes indication information of the target service. The first relay device may determine the third terminal device from the P terminal devices based on the indication information of the target service, and send a second request to the third terminal device, where the second request is used to request to establish a unicast connection between the first relay device and the third terminal device. After receiving the first request, the first relay device may further receive a third request from the first terminal device, and send the third request to the third terminal device. The third request is used to request to establish an end-to-end unicast connection between the first terminal device and the third terminal device. By using this design, the end-to-end unicast connection may be established between the first terminal device and the third terminal device, so that transmission of a service data packet can be performed through the unicast connection.

In a possible design, before sending the third indication information to the first terminal device, the first relay device may separately receive indication information from each of the P terminal devices. The indication information of each of the P terminal devices may indicate Q services, a service data packet of each of the Q services is a service data packet that each terminal device expects to receive, and Q is a positive integer. By using this design, the first terminal device may learn of service data packets of specific services that each of the P terminal devices communicating with the first relay device expects to receive.

According to a fourth aspect, an embodiment of this application provides a communication method. The method includes: A first terminal device may separately receive third indication information from each of R relay devices. The third indication information from each of the R relay devices indicates at least one service, and a service data packet of each of the at least one service is a service data packet that at least one terminal device that can communicate with each relay device expects to receive. R is a positive integer. Then, the first terminal device may select a first relay device from the R relay devices based on the third indication information from each of the R relay devices, and send a service data packet of a target service to the first relay device. The first relay device can communicate with a third terminal device that expects to receive the service data packet of the target service.

According to the method, each first relay device of P terminal devices may send the third indication information indicating the at least one service, and the service data packet of each of the at least one service is the service data packet that the at least one terminal device that can communicate with each relay device expects to receive. When the first terminal device is to send the service data packet of the target service, the first terminal device may find, based on the third indication information, an appropriate relay device, to forward the service data packet of the target service to a terminal device that expects to receive the service data packet of the target service, so that correct transmission of the service data packet can be ensured.

**In** a possible design, before sending the service data packet of the target service to the first relay device, the first terminal device sends a first request and a third request to the first relay device. The first request is used to request to establish a unicast connection between the first relay device and the first terminal device, and the first request includes indication information of the target service. The third request is used to request to establish an end-to-end unicast connection between the first terminal device and the third terminal device. By using this design, the end-to-end unicast connection may be established between the first terminal device and the third terminal device, so that transmission of a service data packet can be performed through the unicast connection.

In a possible design, the R relay devices further include a fourth relay device, and the fourth relay device can communicate with the third terminal device. The method may further include: The first terminal device receives a third response from the first relay device and a fourth response from the fourth relay device. The third response indicates that a second connection between the first terminal device and the third terminal device is established via the first relay device, and the fourth response indicates that a third connection between the first terminal device and the third terminal device is established via the fourth relay device. When signal quality of the second connection is greater than or equal to signal quality of the third connection, the first terminal device may send the service data packet of the target service to the first relay device. By using this design, a plurality of indirect paths exist between the first terminal device and the third terminal device, and each direct path corresponds to one end-to-end connection. The first terminal device may select a path to communicate with the third terminal device, so that a waste of resources can be avoided.

Corresponding to any communication method in the first aspect to the fourth aspect, this application further provides a communication apparatus. The communication apparatus may be any device that performs data transmission in a wireless manner, for example, a communication chip, a terminal device, or a relay device. In some communication processes, the communication apparatus may be used as the foregoing relay device or a communication chip that may be used in the relay device. In some communication processes, the communication apparatus may be used as the foregoing terminal device or a communication chip that may be used in the terminal device.

According to a fifth aspect, an embodiment of this application provides a communication apparatus. The communication apparatus is the foregoing relay device (for example, the first relay device) or terminal device (for example, the first terminal device). The apparatus may include a communication unit and a processing unit, to perform the method provided in any one of the foregoing aspects. The communication unit is configured to perform functions related to sending and receiving.

Optionally, the communication unit includes a receiving unit and a sending unit. In a design, the communication apparatus is a communication chip, and the communication unit may be an input/output circuit or a port of the communication chip. In another design, the communication unit may be a transmitter and a receiver, or the communication unit may be a transmitter machine and a receiver machine.

According to a sixth aspect, an embodiment of this application provides a communication device. The communication device is the foregoing relay device (for example, the first relay device) or terminal device (for example, the first terminal device). The apparatus may include a processor and a communication module. Optionally, the apparatus further includes a memory. The memory is configured to store a computer program or instructions. The processor is configured to: invoke the computer program or the instructions from the memory, and run the computer program or the instructions. When the processor executes the computer program or the instructions in the memory, the communication apparatus is enabled to perform the method provided in any one of the foregoing aspects.

Optionally, there are one or more processors, and there are one or more memories.

Optionally, the memory may be integrated with the processor, or the memory and the processor are disposed separately.

Optionally, the communication module may include a transmitter (transmitter machine) and a receiver (receiver machine).

According to a seventh aspect, an embodiment of this application provides a system. The system includes the foregoing relay device (for example, the first relay device) or terminal device (for example, the first terminal device).

According to an eighth aspect, an embodiment of this application further provides a computer program. When the computer program is run on a computer, the computer is enabled to perform the method provided in any one of the foregoing aspects.

According to a ninth aspect, an embodiment of this application further provides a computer-readable storage medium. The computer-readable storage medium stores a computer program, and when the computer program is executed by a computer, the computer is enabled to perform the method provided in any one of the foregoing aspects.

According to a tenth aspect, an embodiment of this application provides a chip. The chip is configured to read a computer program stored in a memory, to perform the method provided in any one of the foregoing aspects.

According to an eleventh aspect, an embodiment of this application further provides a chip system. The chip system includes a processor, configured to support a computer apparatus in implementing the method provided in any one of the foregoing aspects. In a possible design, the chip system further includes a memory, and the memory is configured to store a program and data that are necessary for the computer apparatus. The chip system may include a chip, or may include a chip and another discrete component.

For technical effects that can be achieved in any one of the fifth aspect to the eleventh aspect, refer to descriptions of technical effects that can be achieved in any one of the possible designs of the first aspect to the fourth aspect. Details are not repeatedly described.

### BRIEF DESCRIPTION OF DRAWINGS

FIG. 1A is a diagram of a communication system to which an embodiment of this application is applicable;
FIG. 1B is a diagram of another communication system to which an embodiment of this application is applicable;
FIG. 1C is a schematic flowchart of communication between two terminal devices via a relay device;
FIG. 2 is a schematic flowchart of a first communication method according to an embodiment of this application;
FIG. 3 is a schematic flowchart of a second communication method according to an embodiment of this application;
FIG. 4 is a schematic flowchart of a third communication method according to an embodiment of this application;
FIG. 5 is a schematic flowchart of a fourth communication method according to an embodiment of this application;
FIG. 6 is a schematic flowchart of a fifth communication method according to an embodiment of this application;
FIG. 7 is a diagram of a structure of a communication apparatus according to an embodiment of this application; and
FIG. 8 is a diagram of a structure of another communication device according to an embodiment of this application.

### DESCRIPTION OF EMBODIMENTS

This application provides a communication method and apparatus, and a device, to improve communication quality between terminal devices. The method, the apparatus, and the device are based on a same technical idea. Because problem resolving principles of the method, the apparatus, and the device are similar, for implementation of the apparatus, the device, and the method, refer to each other. Details are not repeatedly described.

The following describes some terms in this application, to facilitate understanding of a person skilled in the art.
(1) A communication device is generally a device with a communication function. For example, the communication device may be but is not limited to a terminal device, a network device, a core network (core network, CN) device, or the like.
(2) Signal quality may be signal strength. A parameter representing or indicating the signal strength may include but is not limited to at least one of the following: a reference signal received power (reference signal received power, RSRP), reference signal received quality (reference signal received quality, RSRQ), a received signal strength indication (received signal strength indication, RSSI), and a signal to interference plus noise ratio (signal to interference plus noise ratio, SINR).

In embodiments of this application, unless otherwise specified, a quantity of nouns indicates "a singular noun or a plural noun", that is, "one or more". "At least one" means one or more, and "a plurality of" means two or more. The term "and/or" describes an association relationship between associated objects and indicates that three relationships may exist. For example, A and/or B may indicate the following three cases: Only A exists, both A and B exist, and only B exists. "At least one of the following items (pieces)" or a similar expression thereof refers to any combination of these items (pieces), including any combination of a singular item (piece) or a plurality of items (pieces).

In addition, it should be understood that, in descriptions of this application, terms such as "first" and "second" are merely used for distinguishing and description, but should not be understood as indicating or implying relative importance, or should not be understood as indicating or implying a sequence.

The following describes in detail embodiments of this application with reference to accompanying drawings.

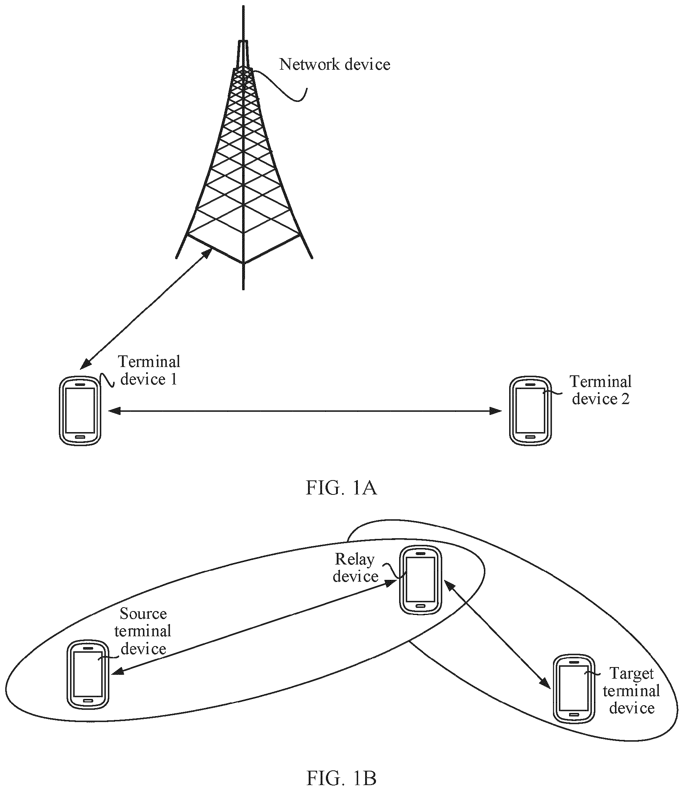

FIG. 1A is a diagram of a communication system to which an embodiment of this application is applicable. As shown in FIG. 1A, the communication system includes a network device and terminal devices (for example, a terminal device 1 and a terminal device 2).

The terminal device may communicate with the network device through a radio interface (for example, a Uu interface). The terminal devices may communicate with each other via the network device, or may directly communicate with each other, for example, communicate with each other through a PC5 interface between the terminal devices. A link between the terminal devices may be referred to as a sidelink (sidelink), a side link, a side-link, a PC5 interface link, or a link between terminal devices.

The terminal device in embodiments of this application may also be referred to as user equipment (user equipment, UE), a mobile station (mobile station, MS), a mobile terminal (mobile terminal, MT), or the like, and is a device having a wireless transceiver function. For example, the terminal device may be a mobile phone (mobile phone), a tablet computer, a notebook computer, a palmtop computer, a mobile internet device (mobile internet device, MID), a wearable device (for example, a smartwatch, a smart band, or a pedometer), a vehicle-mounted device (for example, a vehicle-mounted device on an automobile, a bicycle, an electric vehicle, an aircraft, a ship, a train, or a high-speed train), a virtual reality (virtual reality, VR) device, an augmented reality (augmented reality, AR) device, a wireless terminal in industrial control (industrial control), a smart home device (for example, a refrigerator, a television, an air conditioner, or an electricity meter), an intelligent robot, a workshop device, a wireless terminal in self driving (self driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a flight device (for example, an intelligent robot, a hot balloon, an uncrewed aerial vehicle, or an aircraft), or the like.

The network device in embodiments of this application is a device that is in a network and that is configured to connect the terminal device to a wireless network. The network device may be a node in a radio access network, may also be referred to as a base station, and may be referred to as a radio access network (radio access network, RAN) node (or device). For example, the network device may include an evolved NodeB (NodeB, eNB, or e-NodeB, evolved NodeB) in a long term evolution (long term evolution, LTE) system or an LTE-advanced (LTE-Advanced, LTE-A) system, may include a next generation NodeB (next generation NodeB, gNB) in a 5th generation (5th generation, 5G) new radio (new radio, NR) system, or may include a transmission reception point (transmission reception point, TRP), a home base station (for example, a home evolved NodeB or a home NodeB, HNB), a baseband unit (baseband unit, BBU), a Wi-Fi access point (access point, AP), or the like.

FIG. 1B is a diagram of another communication system to which an embodiment of this application is applicable. As shown in FIG. 1B, the communication system includes a source terminal device (source UE), a relay device (which may also be referred to as a terminal device-to-terminal device relay device, UE-to-UE relay), and a target terminal device (target UE).

According to the communication system shown in FIG. 1B, in a sidelink UE-to-UE relay scenario, the source terminal device may perform sidelink communication with the target terminal device via the relay device. In this way, the sidelink communication between the terminal devices may include sidelink communication between the source terminal device and the relay device, and sidelink communication between the relay device and the target terminal device.

The communication systems shown in FIG. 1A and FIG. 1B do not constitute a limitation on a communication system to which an embodiment of this application is applicable. The communication method provided in embodiments of this application is applicable to communication systems of various standards, for example, a long term evolution (long term evolution, LTE) communication system, a 5G communication system, a 6th generation (6th generation, 6G) communication system, a future communication system, vehicle to everything (vehicle to everything, V2X), long term evolution-vehicle (LTE-vehicle, LTE-V), vehicle to vehicle (vehicle to vehicle, V2V), internet of vehicles, machine type communication (Machine Type Communication, MTC), internet of things (internet of things, IoT), long term evolution-machine to machine (LTE-machine to machine, LTE-M), machine to machine (machine to machine, M2M), internet of things, and the like.

In this application, a first terminal device and a third terminal device may respectively be the terminal device 1 and the terminal device 2 in the communication system shown in FIG. 1A, may respectively be the terminal device 2 and the terminal device 1 in the communication system shown in FIG. 1A, or may respectively be the source terminal device and the target terminal device in the communication system shown in FIG. 1B. A first relay device may be the relay device in the communication system shown in FIG. 1B.

Currently, the NR standard already supports three types of sidelink communication modes, including broadcast, multicast, and unicast. For unicast communication, two terminal devices may be allowed to perform the unicast communication through a direct link between the two terminal devices, for example, unicast communication is performed through the sidelink between the terminal device 1 and the terminal device 2 shown in FIG. 1A. Alternatively, two terminal devices may be allowed to perform the unicast communication via the relay device, for example, in FIG. 1B, the source terminal device performs unicast communication with the target terminal device through the sidelink via the relay device.

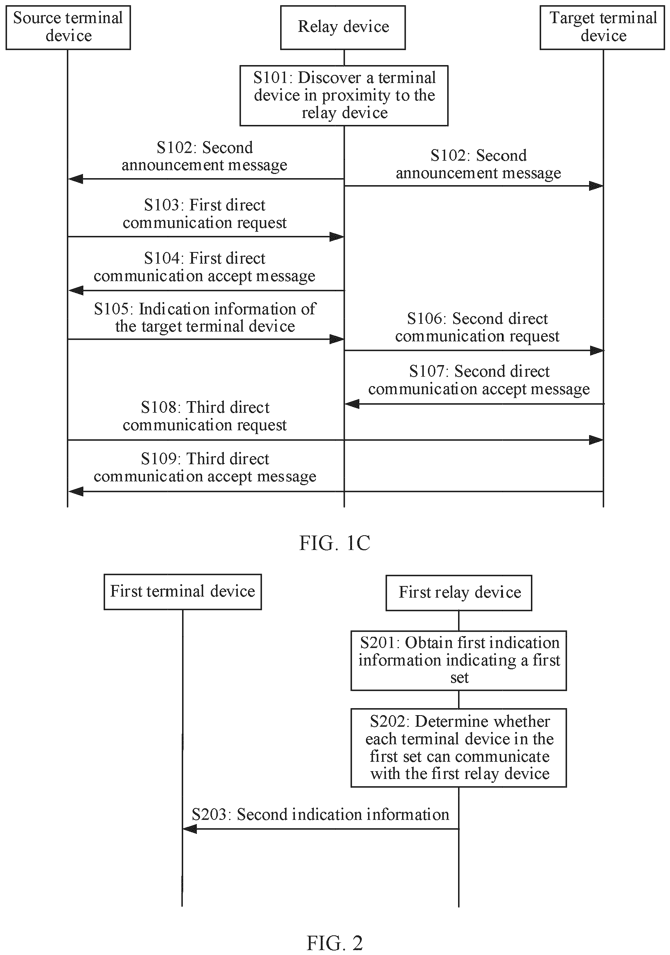

FIG. 1C shows a method of unicast communication between a source terminal device and a target terminal device through a sidelink via a relay device. The method includes the following steps.

S101: The relay device discovers a terminal device in proximity to the relay device.

The terminal device in proximity to the relay device should be a terminal device that can directly communicate with the relay device.

The relay device may discover a terminal device in proximity to the relay device in one of the following manners.

Manner 1: If the relay device receives a first announcement (announcement) message from a terminal device A, the relay device may discover the terminal device A. In other words, the terminal device A may be a terminal device in proximity to the relay device. The first announcement message is used by another communication device to discover the terminal device A.

Manner 2: If the relay device receives a response message from a terminal device B after sending a solicitation (solicitation) message carrying information about the terminal device B, the relay device may discover the terminal device B. In other words, the terminal device B may be a terminal device in proximity to the relay device. The solicitation message is used by the relay device to discover another communication device.

The first announcement message in Manner 1 and the solicitation message and the response message in Manner 2 may further be collectively referred to as discovery (discovery) messages.

Manner 3: Terminal device that has a direct unicast connection to the relay device.

Optionally, terminal devices in proximity to the relay device may include the source terminal device and the target terminal device.

S102: The relay device sends a second announcement message.

Optionally, the relay device may broadcast the second announcement message. In this way, the terminal device in proximity to the relay device may receive the second announcement message. For example, the source terminal device and the target terminal device in FIG. 1C may receive the second announcement message.

The relay device may periodically send the second announcement message.

The second announcement message may include a type of the discovery message, indication information of the relay device, a relay service code (Relay Service Code, RSC), and indication information of the terminal device in proximity. The indication information of the relay device may be a user information identifier (user information identifier, User info ID) of the relay device. The user information identifier of the relay device is, for example, an application identifier (application identifier, APP ID) of the relay device. The indication information of the terminal device in proximity may be a user information identifier of the terminal device in proximity. The user information identifier of the terminal device in proximity is, for example, an application layer identifier of the terminal device in proximity.

S103: The source terminal device sends a first direct communication request (direct communication request, DCR) to the relay device based on the second announcement message, where the first direct communication request carries the indication information of the relay device, and the first direct communication request is used to request to establish a unicast connection between the source terminal device and the relay device. The indication information of the relay device may include the application layer identifier of the relay device. When the source terminal device is to send a service data packet to the target terminal device, the source terminal device may determine whether the indication information that is of the terminal device in proximity and that is in the second announcement message includes indication information of the target terminal device. If the indication information that is of the terminal device in proximity and that is in the second announcement message includes the indication information of the target terminal device, the source terminal device determines that the relay device may communicate with the target terminal device, and sends the first direct communication request to the relay device.

S104: The relay device sends a first direct communication accept (direct communication accept) message to the source terminal device.

The first direct communication accept message is a response message of the first direct communication request, and indicates that the unicast connection between the source terminal device and the relay device has been established.

S105: The source terminal device sends the indication information of the target terminal device to the relay device.

The indication information of the target terminal device may include an application layer identifier of the target terminal device.

S106: The relay device sends a second direct communication request to the target terminal device.

The second direct communication request is used to request to establish a unicast connection between the relay device and the target terminal device.

S107: The target terminal device sends a second direct communication accept message to the relay device.

The second direct communication accept message is a response message of the second direct communication request, and indicates that the unicast connection between the relay device and the target terminal device has been established.

S108: The source terminal device sends a third direct communication request to the target terminal device via the relay device.

The third direct communication request carries the indication information of the target terminal device, and the third direct communication request is used to request to establish an end-to-end unicast connection between the source terminal device and the target terminal device.

Optionally, S108 may include steps P1 and P2.

P1: The source terminal device sends the third direct communication request to the relay device.

After S104, the source terminal device may perform step P1.

P2: The relay device sends the third direct communication request to the target terminal device.

Optionally, after S107, the relay device may perform step P2.

S109: The target terminal device sends a third direct communication accept message to the source terminal device via the relay device.

The third direct communication accept message is a response message of the third direct communication request, and indicates that the unicast connection between the source terminal device and the target terminal device has been established.

According to the foregoing method, the source terminal device establishes the connection to the target terminal device via the relay device, to communicate with the target terminal device via the relay device.

However, the method shown in FIG. 1C has at least the following problems.

Problem 1: In S102, the indication information that is of the terminal device in proximity and that is sent by the relay device may be inaccurate. Specifically, the relay device may send the second announcement message after a period of time since discovering the terminal device in proximity. For example, when the relay device periodically sends the second announcement message, the relay device sends the second announcement message in a second periodicity again after sending the second announcement message in a first periodicity. Because a terminal device may be movable, when the relay device is to send the second announcement message, some terminal devices may have moved out of a communication range of the relay device. In this case, the indication information that is of the terminal device in proximity and that is sent by the relay device may include a terminal device that has moved out of the communication range of the relay device. If the source terminal device selects a relay device based on the indication information of the terminal device in proximity, an inappropriate relay device may be selected. Consequently, communication quality between the terminal devices is poor, and even the communication is interrupted. For example, terminal devices in proximity initially determined by a relay device A include the source terminal device and the target terminal device. If the target terminal device has moved out of a communication range of the relay device A when the relay device A sends the second announcement message, according to the method shown in FIG. 1C, the relay device A still sends the second announcement message including the indication information of the target terminal device. If the source terminal device selects the relay device A to send the service data packet to the target terminal device, the communication is interrupted.

Problem 2: In the method, the source terminal device selects a relay device only based on the indication information of the terminal device in proximity, in other words, selects the relay device only based on whether the relay device can communicate with the target terminal device. In this case, communication quality of communication performed via the relay device cannot be ensured.

To resolve the foregoing problem 1, an embodiment of this application provides a communication method. The method may be applied to the communication systems shown in FIG. 1A and FIG. 1B. The following describes a procedure of the method in detail with reference to a flowchart shown in FIG. 2.

S201: A first relay device obtains first indication information indicating a first set.

Optionally, when the first relay device is to broadcast information included indication information of a terminal device in proximity, the first relay device may obtain the first indication information indicating the first set.

The first set may include at least one terminal device. For example, the first set may include at least one terminal device in proximity. The first indication information may include indication information of each terminal device in the first set. For example, the first indication information may include a user information identifier or a user equipment identifier of each terminal device in the first set. The user information identifier is, for example, an application layer identifier. The user equipment identifier is, for example, a generic public subscription identifier (generic public subscription identifier, GPSI) or a subscription permanent identifier (subscription permanent identifier, SUPI).

In some possible manners, the first relay device may use, as the first indication information indicating the first set, indication information that is of a terminal device in proximity and that is in a first announcement message sent last time. In some other possible manners, the first relay device may discover a terminal device in proximity to the first relay device, and use, as the first indication information indicating the first set, indication information of the discovered terminal device in proximity. For a manner in which the first relay device discovers the terminal device in proximity to the first relay device, refer to Manner 1, Manner 2, or Manner 3 in S101. Details are not described herein again.

S202: The first relay device determines whether each terminal device in the first set can communicate with the first relay device.

A second terminal device is any terminal device in the first set, and the first relay device may determine, in the following manner, whether the second terminal device can communicate with the first relay device:
If the first relay device receives a first message from the second terminal device, the first relay device may determine that the second terminal device can communicate with the first relay device. If the first relay device receives no first message from the second terminal device, the first relay device may determine that the second terminal device cannot communicate with the first relay device.

Optionally, the first message may be at least one of the following:
1. First announcement message sent by the second terminal device, where the first announcement message may be the first announcement message in Manner 1, and is used by a communication device other than the second terminal device to discover the second terminal device.
2. A response message sent by the second terminal device.

In some possible manners, the response message is used to respond to a solicitation message sent by the first relay device. The solicitation message may be the solicitation message in Manner 2, and is used by a communication device other than the first relay device to discover the first relay device. In this case, in S202, the first relay device may first send the solicitation message to the second terminal device.

In some other possible manners, the response message is used to respond to a direct communication request sent by the first relay device. The direct communication request is used to request to establish a connection between the first relay device and the second terminal device. In this case, in S202, the first relay device may first send the direct communication request to the second terminal device.

S203: The first relay device sends, to a first terminal device, second indication information indicating a second set. Correspondingly, the first terminal device receives, from the first relay device, the second indication information indicating the second set.

The second set includes a terminal device that is in the first set and that can communicate with the first relay device. For example, the first set includes the first terminal device, a terminal device 2 to a terminal device 8, and a third terminal device. In S202, if the first relay device determines that the following terminal devices, namely, the first terminal device, the terminal device 2 to the terminal device 6, and the third terminal device, can communicate with the first relay device, the second set includes the first terminal device, the terminal device 2 to the terminal device 6, and the third terminal device.

Optionally, the second indication information includes indication information of each terminal device in the second set. For example, the second indication information may include a user information identifier (for example, an application layer identifier) or a user equipment identifier (for example, a GPSI or an SUPI) of each terminal device in the second set.

The second indication information indicating the second set may be carried in an existing message (for example, the second announcement message shown in FIG. 1C), or may be carried in a new message.

In addition, the first relay device may send, to the first terminal device in a broadcast manner, the second indication information indicating the second set.

According to the method, after checking whether all terminal devices in the first set can communicate with the first relay device, the first relay device sends the second indication information, to indicate the second set including a terminal device that can communicate with the first relay device, so that accuracy of information sent by the first relay device is improved. In this way, the first terminal device can select, based on the accurate second indication information, the first relay device to perform communication between terminal devices, so that communication quality between the terminal devices can be improved.

Optionally, in a first time period after S202, the first relay device may perform S203. In other words, the first relay device may send, to the first terminal device in the first time period after whether each terminal device in the first set can communicate with the first relay device is determined, the second indication information indicating the second set. The first time period may be preset, or may be obtained from another communication device (for example, a network device). For example, the first time period may be 7 seconds (s).

According to the method, the first relay device may send, to the first terminal device in the first time period in which that the first relay device can communicate with each terminal device in the second set is determined, the indication information indicating the second set, so that accuracy of the indication information of the second set can be improved.

Optionally, to improve the communication quality and communication efficiency, the first relay device may further limit a terminal device in the second set. Specifically, each terminal device in the second set may further meet at least one of the following conditions.

Condition 1: Each terminal device in the second set has a capability of communicating with a terminal device via a relay device.

For example, the first set includes the first terminal device, the terminal device 2 to the terminal device 8, and the third terminal device. In S202, if the first relay device determines that the following terminal devices, namely, the first terminal device, the terminal device 2 to the terminal device 6, and the third terminal device, can communicate with the first relay device, and the following terminal devices, namely, the first terminal device, the terminal device 2 to the terminal device 5, and the third terminal device, have a capability of communicating with a terminal device via a relay device, the second set includes the first terminal device, the terminal device 2 to the terminal device 5, and the third terminal device.

Optionally, the first relay device may determine, based on capability indication information of each terminal device in the first set, whether each terminal device in the first set has a capability of communicating with a terminal device via a relay device, to determine the second set. Specifically, before sending, to the first terminal device, the second indication information indicating the second set, the first relay device may obtain the capability indication information of each terminal device in the first set, where the capability indication information of each terminal device in the first set indicates whether each terminal device has a capability of communicating with a terminal device via a relay device. Then, the first relay device may determine whether each terminal device in the first set has a capability of communicating with a terminal device via a relay device. The capability indication information of each terminal device in the first set may explicitly indicate a capability of a corresponding terminal device, or may indicate, by using a field, whether a corresponding terminal device has a capability of communicating with a terminal device via a relay device. The capability indication information of each terminal device in the first set may be carried in an existing message (for example, the first announcement message in Manner 1), or may be carried in a new message. This is not limited in this application.

Based on the condition 1, the first relay device may further limit the terminal device in the second set, so that signaling overheads can be reduced, and transmission resources can be saved. In addition, each terminal device in the second set has a capability of communicating with a terminal device via a relay device, so that the first terminal device can be prevented from requesting to communicate, via the relay device, with a terminal device that does not have the capability. In this way, the communication quality and the communication efficiency can be further improved.

Condition 2: Signal quality between each terminal device in the second set and the first relay device is greater than or equal to a first threshold.

For example, the first set includes the first terminal device, the terminal device 2 to the terminal device 8, and the third terminal device. In S202, if the first relay device determines that the following terminal devices, namely, the first terminal device, the terminal device 2 to the terminal device 6, and the third terminal device, can communicate with the first relay device, and signal quality between the first relay device and the following terminal devices, namely, the first terminal device, the terminal device 2 to the terminal device 4, and the third terminal device, is greater than or equal to the first threshold, the second set includes the first terminal device, the terminal device 2 to the terminal device 4, and the third terminal device.

Optionally, the first relay device may detect signal quality between each terminal device in the first set and the first relay device, to determine the second set. The first relay device may determine the signal quality between each terminal device in the first set and the first relay device by detecting signal strength of a first message sent by each terminal device in the first set. For specific content of the first message, refer to that in S202. Details are not described herein again.

In addition, the first threshold may be preset, or may be obtained from another communication device (for example, the network device).

Based on the condition 2, the first relay device may further limit the terminal device in the second set, so that signaling overheads can be reduced, and transmission resources can be saved. In addition, the signal quality between each terminal device in the second set and the first relay device is greater than or equal to the first threshold. In this way, when the first terminal device communicates with the another terminal device via the first relay device, the communication quality can be ensured.

Condition 3: The signal quality between each terminal device in the second set and the first relay device is greater than or equal to the first threshold and less than a second threshold, and the second threshold is greater than the first threshold.

For example, the first set includes the first terminal device, the terminal device 2 to the terminal device 8, and the third terminal device. In S202, if the first relay device determines that the following terminal devices, namely, the first terminal device, the terminal device 2 to the terminal device 6, and the third terminal device, can communicate with the first relay device, and signal quality between the first relay device and the following terminal devices, namely, the first terminal device, the terminal device 2, the terminal device 3, and the third terminal device, is greater than or equal to the first threshold and less than the second threshold, the second set includes the first terminal device, the terminal device 2, the terminal device 3, and the third terminal device.

Optionally, the first relay device may detect the signal quality between each terminal device in the first set and the first relay device, to determine the second set. For a manner in which the first relay device detects the signal quality between each terminal device in the first set and the first relay device, refer to the condition 2. Details are not described herein again.

In addition, the first threshold and the second threshold may be preset, or may be obtained from another communication device (for example, the network device).

Based on the condition 3, the first relay device may further limit the terminal device in the second set, so that signaling overheads can be reduced, and transmission resources can be saved. In addition, the signal quality between each terminal device in the second set and the first relay device is greater than or equal to the first threshold. In this way, when the first terminal device communicates with the another terminal device via the first relay device, the communication quality can be ensured. In addition, the signal quality between each terminal device in the second set and the first relay device is less than the second threshold, so that a terminal device in proximity to the first relay device can be removed, thereby further improving the communication efficiency between the terminal devices.

Optionally, after S202, the method further includes step M1:
M1: The first relay device may further send information indicating the signal quality between each terminal device in the second set and the first relay device.

For example, the second set includes the first terminal device and the terminal device 2, and the first relay device may send information indicating signal quality between the first terminal device and the first relay device and information indicating signal quality between the terminal device 2 and the first relay device.

A sequence of performing steps M1 and S203 is not limited in this application.

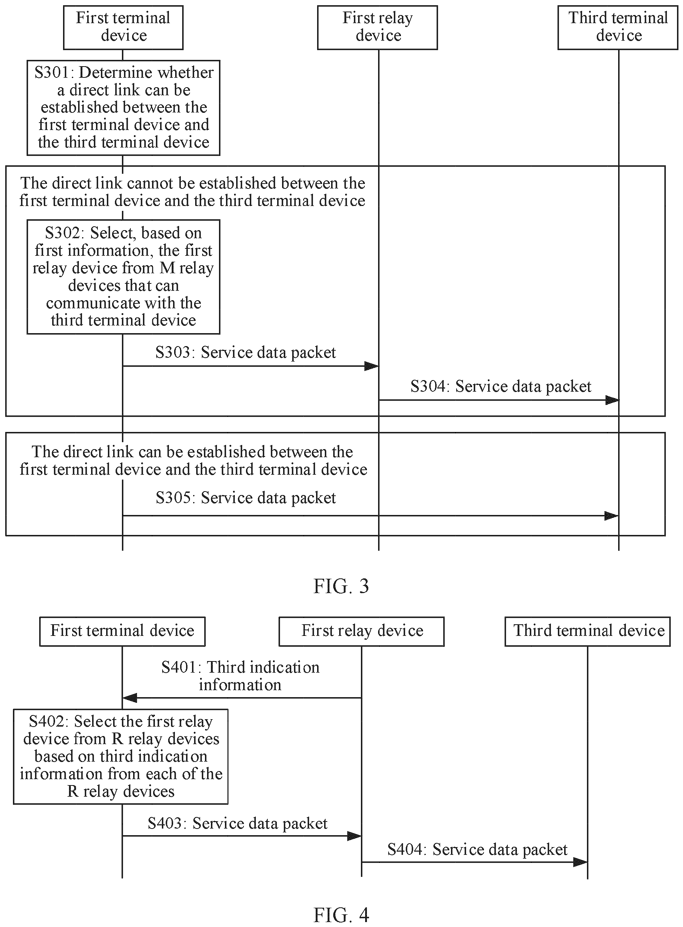

To resolve the foregoing problem 2, an embodiment of this application provides a communication method. The method may be applied to the communication systems shown in FIG. 1A and FIG. 1B. The following describes a procedure of the method in detail with reference to a flowchart shown in FIG. 3.

S301: A first terminal device determines whether a direct link can be established between the first terminal device and a third terminal device.

When the first terminal device is to send a service data packet to the third terminal device, the first terminal device may determine whether the direct link can be established between the first terminal device and the third terminal device.

Optionally, the first terminal device may determine, in one of the following implementations, whether the direct link can be established between the first terminal device and the third terminal device.

Implementation 1: The first terminal device determines, based on signal quality of a second message from the third terminal device, whether the direct link can be established between the first terminal device and the third terminal device. Specifically, when the signal quality of the second message from the third terminal device is less than a fifth threshold, the first terminal device may determine that the direct link cannot be established between the first terminal device and the third terminal device. When the signal quality of the second message from the third terminal device is greater than or equal to a fifth threshold, the first terminal device may determine that the direct link can be established between the first terminal device and the third terminal device.

The signal quality of the second message from the third terminal device may be obtained by the first terminal device through detection. The second message may be an existing message (for example, a first announcement message used as a discovery message, a direct communication request, or a response message of a direct communication request) transmitted between the first terminal device and the third terminal device, or may be a new message. The fifth threshold may be preset, or may be obtained by the first terminal device from another communication device (for example, a network device).

Implementation 2: The first terminal device determines, based on whether a second message from the third terminal device can be received, whether the direct link can be established between the first terminal device and the third terminal device.

For specific content of the second message, refer to Implementation 1. Details are not described herein again.

In addition, when the second message is a response message of a solicitation message or a direct communication request, the first terminal device may determine, in one of the following manners, whether the direct link can be established between the first terminal device and the third terminal device.

Manner A: If the first terminal device receives no second message from the third terminal device, the first terminal device may send the solicitation message or the direct communication request for a plurality of times in a second time period until the second message is received or the second time period ends. If the first terminal device receives the second message from the third terminal device in the second time period, the first terminal device may determine that the direct link can be established between the first terminal device and the third terminal device. If the first terminal device receives no second message from the third terminal device in the second time period, the first terminal device may determine that the direct link cannot be established between the first terminal device and the third terminal device. The second time period may be preset, or may be obtained by the first terminal device from another communication device.

Manner B: If the first terminal device receives no second message from the third terminal device, the first terminal device may send the solicitation message or the direct communication request for a plurality of times until the second message is received or a specified quantity of sending times is reached. If the first terminal device receives the second message from the third terminal device, the first terminal device may determine that the direct link can be established between the first terminal device and the third terminal device. If the first terminal device still receives no second message from the third terminal device after sending the solicitation message or the direct communication request for the specified quantity of sending times, the first terminal device may determine that the direct link cannot be established between the first terminal device and the third terminal device.

S302: If determining that the direct link cannot be established between the first terminal device and the third terminal device, the first terminal device selects, based on first information, a first relay device from M relay devices that can communicate with the third terminal device, where M is a positive integer.

The first information includes signal quality between each of the M relay devices and the first terminal device. Optionally, the first terminal device may determine the signal quality between each of the M relay devices and the first terminal device by detecting signal quality of a fourth message sent by each of the M relay devices to the first terminal device. The fourth message may be an existing message (for example, an announcement message used as a discovery message, a direct communication request, or a response message of a direct communication request) transmitted between the first terminal device and each of the M relay devices, or may be a new message.

Optionally, the first relay device determined by the first terminal device should meet at least one of the following conditions:
Condition 1: Signal quality between the first relay device and the first terminal device is greater than or equal to a third threshold. In other words, the first terminal device may select, from the M relay devices, a relay device whose signal quality with the first terminal device is greater than or equal to the third threshold, namely, the first relay device.

Optionally, when the M relay devices include a plurality of relay devices whose signal quality with the first terminal device is greater than or equal to the third threshold, the first terminal device may select, from the plurality of relay devices, a relay device that has highest signal quality with the first terminal device, namely, the first relay device. Alternatively, a relay device, namely, the first relay device, may be randomly selected from the plurality of relay devices.

Condition 2: The first relay device is a relay device that is in the M relay devices and that has highest signal quality with the first terminal device. In other words, the first terminal device may select the relay device that is in the M relay devices and that has highest signal quality with the first terminal device, namely, the first relay device.

According to the method, the first terminal device may select, based on signal quality between a relay device and the first terminal device, a relay device whose signal quality meets the condition 1 and/or the condition 2, to perform transmission of the service data packet, so that communication quality can be ensured.

Optionally, the first information may further include signal quality between each of the M relay devices and the third terminal device. In this case, the first relay device determined by the first terminal device should meet one of the following conditions:
Condition A: The signal quality between the first relay device and the first terminal device is greater than or equal to the third threshold, and signal quality between the first relay device and the third terminal device is greater than or equal to a fourth threshold. In other words, the first terminal device selects, from the M relay devices, a relay device that meets the condition A, namely, the first relay device.

Optionally, when the M relay devices include S relay devices that meet the condition A, the first terminal device may randomly select a relay device, namely, the first relay device, from the S relay devices, or may select a relay device that has highest signal quality with the first terminal device and/or the third terminal device, namely, the first relay device, from the S relay devices. S is a positive integer greater than or equal to 2.

Condition B: The first relay device is the relay device that is in the M relay devices and that has highest signal quality with the first terminal device, and the signal quality between the first relay device and the third terminal device is greater than or equal to a fourth threshold. In other words, the first terminal device selects, from the M relay devices, a relay device that meets the condition B, namely, the first relay device.

Optionally, when the M relay devices include O relay devices that meet the condition B, the first terminal device may randomly select a relay device, namely, the first relay device, from the O relay devices, or may select a relay device that has highest signal quality with the third terminal device, namely, the first relay device, from the O relay devices. O is a positive integer greater than or equal to 2.

Condition C: The signal quality between the first relay device and the first terminal device is greater than or equal to the third threshold, and the first relay device is a relay device that is in the M relay devices and that has highest signal quality with the third terminal device. In other words, the first terminal device selects, from the M relay devices, a relay device that meets the condition C, namely, the first relay device.

Optionally, when the M relay devices include T relay devices that meet the condition C, the first terminal device may randomly select a relay device, namely, the first relay device, from the T relay devices, or may select a relay device that has highest signal quality with the first terminal device, namely, the first relay device, from the T relay devices. T is a positive integer greater than or equal to 2.

Condition D: The first relay device is the relay device that is in the M relay devices and that has highest signal quality with the first terminal device, and the first relay device is a relay device that is in the M relay devices and that has highest signal quality with the third terminal device. In other words, the first terminal device selects, from the M relay devices, a relay device that meets the condition D, namely, the first relay device.

According to the method, the first terminal device may select, based on the signal quality between the relay device and the first terminal device and signal quality between the relay device and the third terminal device, a relay device whose signal quality meets any one of the condition A to the condition D, to perform transmission of the service data packet, so that the communication quality can be ensured.

Optionally, the first terminal device may determine the signal quality between each of the M relay devices and the third terminal device by using the following steps A1 and A2.

A1: The first terminal device separately receives signal quality indication information from each of the M relay devices.

The signal quality indication information from each of the M relay devices indicates signal quality between a corresponding relay device and the third terminal device. For example, the M relay devices include a relay device 2, where the relay device 2 can communicate with the third terminal device, and signal quality indication information from the relay device 2 may indicate signal quality between the relay device 2 and the third terminal device.

Optionally, the signal quality indication information from each of the M relay devices may be carried in an existing message (for example, the second announcement message in S102), or may be carried in a new message.

A2: The first terminal device determines the signal quality between each relay device and the third terminal device based on the signal quality indication information from each of the M relay devices.

For example, the M relay devices include the relay device 2, where the relay device 2 can communicate with the third terminal device, and the first terminal device may determine the signal quality between the relay device 2 and the third terminal device based on the signal quality indication information from the relay device 2.

In this way, the first terminal device may determine the signal quality between each relay device and the third terminal device.

Optionally, the first information may further include a connection status between each of the M relay devices and the first terminal device. In this case, a unicast connection has been established between the first relay device and the first terminal device. In other words, the first terminal device selects, from the M relay devices as the first relay device, a relay device that has established a unicast connection to the first terminal device.

For example, when the M relay devices include U relay devices that meet any one of the condition A to the condition D, the first terminal device may select, from the U relay devices as the first relay device, a relay device that has established a unicast connection to the first terminal device. U is a positive integer greater than 1.

For another example, when the M relay devices include V relay devices that meet any one of the condition A to the condition D, and all the V relay devices have established unicast connections to the first terminal device, the first relay device may be a relay device that is in the V relay devices and that has highest signal quality with the first terminal device, and/or the first relay device is a relay device that is in the V relay devices and that has highest signal quality with the third terminal device. V is a positive integer greater than 1.

In the method, the first terminal device preferentially selects the first relay device that has established the unicast connection to the first terminal device, to perform the transmission of the service data packet. In this way, the first terminal device does not need to establish the unicast connection again, so that a transmission delay can be reduced.

Optionally, in S302, the first terminal device may determine, by using the following steps B1 and B2, the M relay devices that can communicate with the third terminal device.

B1: Before selecting, based on the first information, the first relay device from the M relay devices that can communicate with the third terminal device, the first terminal device separately receives indication information from each of N relay devices.

The indication information from each of the N relay devices indicates at least one terminal device that can communicate with each relay device, and N is a positive integer.

Optionally, for specific content of step B1, refer to the descriptions of "the first terminal device receives, from the first relay device, the second indication information indicating the second set" in the method shown in FIG. 2. An only difference is that the first relay device is replaced with each of the N relay devices, and the second indication information indicating the second set is replaced with the indication information indicating the at least one terminal device that can communicate with each relay device.

B2: The first terminal device determines, based on indication information from the N relay devices, M relay devices that are in the N relay devices and that can communicate with the third terminal device.

For example, the N relay devices include a relay device 3 and a relay device 4. Indication information from the relay device 3 indicates that the relay device 3 can communicate with the following terminal devices: the first terminal device, a terminal device 2, and the third terminal device. Indication information from the relay device 4 indicates that the relay device 4 can communicate with the following terminal devices: the first terminal device and the terminal device 2. In this case, the first terminal device may determine that the M relay devices that can communicate with the third terminal device include the relay device 3.

In this way, the first terminal device may determine the M relay devices that can communicate with the third terminal device.

S303: The first terminal device sends, to the first relay device, a service data packet to be sent to the third terminal device.

Optionally, the service data packet includes indication information of the third terminal device.

Optionally, to establish a unicast connection between the first terminal device and the third terminal device, before S303, the method further includes steps N1 to N9.

N1: The first terminal device sends a first request to the first relay device, where the first request is used to request to establish the unicast connection between the first terminal device and the first relay device.

The first request may be an existing message (for example, a direct communication request), or may be a new message. For specific content of the first request, refer to the first direct communication request in S103. Details are not described herein again.

N2: The first relay device sends a first response to the first terminal device.

The first response is a response message of the first request, and indicates that the unicast connection between the first terminal device and the first relay device has been established.

In addition, the first response may be an existing message (direct communication accept), or may be a new message.

N3: The first terminal device sends the indication information of the third terminal device to the first relay device.

The indication information of the third terminal device may include an application layer identifier of the third terminal device.

Step N3 is an optional step. For example, when the first request includes the indication information of the third terminal device, step N3 is optional.

N4: The first relay device sends a second request to the third terminal device.

The second request is used to request to establish a unicast connection between a relay device and the third terminal device.

In addition, the second request may be an existing message (for example, a direct communication request), or may be a new message.

N5: The third terminal device sends a second response to the first relay device.

The second response is a response message of the second request, and indicates that the unicast connection between the first relay device and the third terminal device has been established.

In addition, the second response may be an existing message (direct communication accept), or may be a new message.

N6: The first terminal device sends a third request to the first relay device.

The third request carries the indication information of the third terminal device, and the third request is used to request to establish an end-to-end unicast connection between the first terminal device and the third terminal device.

In addition, the third request may be an existing message (for example, a direct communication request), or may be a new message.

Optionally, after step N2, the first terminal device may perform step N6.

N7: The first relay device sends the third request to the third terminal device.

Optionally, after step N5, the first relay device may perform step N7.

N8: The third terminal device sends a third response to the first relay device.

The third response is a response message of the third request, and indicates that the unicast connection between the first terminal device and the third terminal device has been established via the first relay device.

In addition, the third response may be an existing message (direct communication accept), or may be a new message.

N9: The first relay device sends the third response to the first terminal device.

S304: The first relay device sends, to the third terminal device, the service data packet to be sent to the third terminal device.

Optionally, the first relay device may determine, based on the indication information of the third terminal device, that a target terminal device of the service data packet is the third terminal device, and send the service data packet to the third terminal device.

Optionally, in S301, if the first terminal device determines that the direct link can be established between the first terminal device and the third terminal device, after S301, the method shown in FIG. 3 further includes step S305.

S305: The first terminal device sends, to the third terminal device through the direct link between the first terminal device and the third terminal device, the service data packet to be sent to the third terminal device.

In some possible manners, a direct link already exists between the first terminal device and the third terminal device. The first terminal device may send the service data packet to the third terminal device through the direct link. In some other possible manners, when a direct link does not exist between the first terminal device and the third terminal device, the first terminal device may send, to the third terminal device, a direct communication request for requesting to establish the direct link. After the direct link is established between the first terminal device and the third terminal device, the service data packet is sent to the third terminal device.

According to the method, the first terminal device preferentially selects the direct link between the first terminal device and the third terminal device to perform the transmission of the service data packet, so that the transmission delay of the service data packet can be reduced.

Optionally, in S302, when the first terminal device fails to select the first relay device from the M relay devices based on the first information, the method shown in FIG. 3 further includes step C1.

C1: The first terminal device may send a third message to the third terminal device.

The third message is used to request to establish the direct link between the first terminal device and the third terminal device. In this way, after the direct link between the first terminal device and the third terminal device is established, the first terminal device may send, to the third terminal device through the direct link, the service data packet to be sent to the third terminal device.

Optionally, the third message may be an existing message (for example, a direct communication request), or may be a new message.

According to the method, when the direct link between the first terminal device and the third terminal device does not meet a signal quality requirement, and the first terminal device fails to find the first relay device by performing S302, in other words, when the first terminal device fails to find an indirect path that meets the signal quality requirement, the first terminal device may communicate with the third terminal device through the direct link, so that communication complexity and signaling overheads can be reduced.

Optionally, S302 to S304 are applicable to a re-selection procedure. Before S302, the method shown in FIG. 3 further includes step D1 and step D2.

D1: The first terminal device may communicate with the third terminal device via a second relay device.

For a manner in which the first terminal device selects the second relay device, refer to S302. An only difference is that the first relay device is replaced with the second relay device. Details are not described herein again.

D2: When a connection between the first terminal device and the second relay device is interrupted, or a connection between the third terminal device and the second relay device is interrupted, the first terminal device may alternatively re-select a relay device, namely, the first relay device, by using S302.

The first terminal device may detect whether the connection between the first terminal device and the second relay device is interrupted. Specifically, the first terminal device may periodically or aperiodically send a heartbeat signal to the second relay device. If the first terminal device receives a response signal of the heartbeat signal from the second relay device in specified time after the heartbeat signal is sent, the first terminal device determines that the connection between the first terminal device and the second relay device is not interrupted; or if the first terminal device receives no response signal of the heartbeat signal from the second relay device in specified time after the heartbeat signal is sent, the first terminal device determines that the connection between the first terminal device and the second relay device is interrupted. The heartbeat signal may be replaced with a path detection message.

The first terminal device may determine, based on first connection indication information from the second relay device, whether the connection between the third terminal device and the second relay device is interrupted. The first connection indication information from the second relay device may indicate whether the connection between the second relay device and the third terminal device is interrupted. The first connection indication information from the second relay device may be carried in an existing message, or may be carried in a new message.

According to the method, in the re-selection procedure, the first terminal device may select a relay device based on signal quality, so that the communication quality during the transmission of the service data packet via the relay device can be ensured.

Optionally, before "selecting, based on the first information, the first relay device from the M relay devices that can communicate with the third terminal device" in S302, when the connection between the first terminal device and the second relay device is interrupted, or the connection between the third terminal device and the second relay device is interrupted, an end-to-end connection between the first terminal device and the third terminal device, namely, a first connection, may be released in one of the following implementations.

Implementation 1: The first terminal device releases the first connection between the first terminal device and the third terminal device.

The first terminal device may release the first connection between the first terminal device and the third terminal device after determining, in the manner in step D1, that the connection between the first terminal device and the second relay device is interrupted or the connection between the third terminal device and the second relay device is interrupted.

Implementation 2: The third terminal device releases the first connection between the first terminal device and the third terminal device.

The third terminal device may detect whether the connection between the third terminal device and the second relay device is interrupted. For a specific detection manner, refer to step D1. An only difference is that the first terminal device is replaced with the third terminal device. Details are not described herein again.

The third terminal device may determine, based on second connection indication information from the second relay device, whether the connection between the first terminal device and the second relay device is interrupted. The second connection indication information from the second relay device indicates whether the connection between the second relay device and the first terminal device is interrupted. The second connection indication information from the second relay device may be carried in an existing message, or may be carried in a new message.

According to the method, when the connection between the first terminal device and the second relay device is interrupted, or the connection between the third terminal device and the second relay device is interrupted, the first terminal device or the third terminal device may release the connection between the first terminal device and the third terminal device in a timely manner, so that unnecessary occupation of resources is avoided.

An embodiment of this application further provides a communication method. The method may be applied to the communication systems shown in FIG. 1A and FIG. 1B. The following describes a procedure of the method in detail with reference to a flowchart shown in FIG. 4.

S401: A first relay device sends third indication information to a first terminal device. Correspondingly, the first terminal device receives the third indication information from the first relay device.

Optionally, the first relay device may send the third indication information to the first terminal device when the first relay device is to broadcast information about a terminal device in proximity. For example, when the first relay device is to send the second announcement message in the method shown in FIG. 1C, the first relay device sends the third indication information to the first terminal device.

The third indication information indicates at least one service, and a service data packet of each of the at least one service is a service data packet that at least one terminal device that can communicate with the first relay device expects to receive.

Optionally, the third indication information includes service indication information, for example, a service identifier, of each of the at least one service. For example, terminal devices that can communicate with the first relay device include the first terminal device, a terminal device 2, and a third terminal device. The first terminal device expects to receive service data packets of a service 1 and a service 2. The terminal device 2 expects to receive service data packets of the service 2 and a service 3. The third terminal device expects to receive a service data packet of a service 4. In this case, the third indication information may include service identifiers of the service 1 to the service 4.

In addition, the third indication information may be carried in an existing message (for example, the second announcement message in the method shown in FIG. 1C), or may be carried in a new message.

Optionally, before S401, the first relay device may separately receive indication information from each of P terminal devices that can communicate with the first relay device. The indication information of each of the P terminal devices indicates Q services, and a service data packet of each of the Q services is a service data packet that each terminal device expects to receive. P and Q are positive integers. For example, the first relay device receives, from the first terminal device, indication information indicating the service 1 and the service 2, to determine that the first terminal device expects to receive the service data packets of the service 1 and the service 2. For another example, the first relay device receives, from the terminal device 2, indication information indicating the service 2 and the service 3, to determine that the terminal device 2 expects to receive the service data packets of the service 2 and the service 3. For still another example, the first relay device receives, from the third terminal device, indication information indicating the service 4, to determine that the third terminal device expects to receive the service data packet of the service 4. In addition, the indication information of each of the P terminal devices may be carried in an existing message, or may be carried in a new message.

According to the method, the first relay device may learn of service data packets of specific services that each of the P terminal devices communicating with the first relay device expects to receive.

Optionally, in the manner in S401, the first terminal device may receive third indication information from each of R relay devices. The third indication information from each of the R relay devices may indicate the at least one service, and the service data packet of each of the at least one service is a service data packet that at least one terminal device that can communicate with each relay device expects to receive. R is a positive integer.

S402: The first terminal device selects the first relay device from the R relay devices based on the third indication information from each of the R relay devices.

The first relay device can communicate with a third terminal device that expects to receive a service data packet of a target service.

Optionally, when the first terminal device is to send the service data packet of the target service, the first terminal device may select the first relay device from the R relay devices based on indication information from each of the R relay devices.

For example, the R relay devices include the first relay device and a third relay device. The third indication information from the first relay device includes the service identifiers of the service 1 to the service 4, and third indication information from the third relay device includes service identifiers of the service 1, the service 2, and a service 5. If the target service is the service 4, the first terminal device may select the first relay device from the R relay devices.

S403: The first terminal device sends the service data packet of the target service to the first relay device. Correspondingly, the first relay device receives the service data packet of the target service from the first terminal device.

The first terminal device may send the service data packet of the target service to the first relay device through a connection between the first terminal device and the first relay device.

Optionally, the service data packet of the target service includes indication information of the target service, for example, an identifier of the target service.

S404: The first relay device sends the service data packet of the target service to the third terminal device. Correspondingly, the third terminal device receives the service data packet of the target service from the first relay device.

The third terminal device is a terminal device that is in the P terminal devices that can communicate with the first relay device and that expects to receive the service data packet of the target service.

Optionally, the first relay device may select the third terminal device from the P terminal devices based on the indication information of the target service. For example, the P terminal devices that can communicate with the first relay device include the first terminal device, the terminal device 2, and the third terminal device. The first terminal device expects to receive the service data packets of the service 1 and the service 2. The terminal device 2 expects to receive the service data packets of the service 2 and the service 3. The third terminal device expects to receive the service data packet of the service 4. If the target service is the service 4, the first relay device may send the service data packet of the service 4 to the third terminal device.

According to the method, the first relay device may broadcast the third indication information indicating the at least one service, and the service data packet of each of the at least one service is the service data packet that the at least one terminal device that can communicate with the first relay device expects to receive. When the terminal device is to send the service data packet of the target service, the terminal device may find, based on the third indication information, an appropriate relay device, to forward the service data packet of the target service to a terminal device that expects to receive the service data packet of the target service, so that correct transmission of the service data packet can be ensured.

Optionally, before S403, the first terminal device establishes the connection between the first terminal device and the third terminal device via the first relay device. Specifically, the method shown in FIG. 4 further includes steps E1 to E5.

E1: The first terminal device sends a first request to the first relay device. Correspondingly, the first relay device receives the first request from the first terminal device.

The first request is used to request to establish a unicast connection between the first terminal device and the first relay device. The first request may be an existing message (for example, a direct communication request), or may be a new message.

Optionally, the first request includes the indication information of the target service.

Optionally, after step E1, the first relay device may send a first response to the first terminal device. For specific content, refer to step N2. Details are not described herein again.

E2: The first relay device determines the third terminal device from the P terminal devices based on the indication information of the target service.

For specific content of step E2, refer to the descriptions of "the first relay device may select the third terminal device from the P terminal devices based on the indication information of the target service" in S404. Details are not described herein again.

E3: The first relay device sends a second request to the third terminal device. Correspondingly, the third terminal device receives the second request from the first relay device.

The second request is used to request to establish a unicast connection between the first relay device and the third terminal device. The second request may be an existing message (for example, a direct communication request), or may be a new message.

Optionally, the second request further includes the indication information of the target service.

Optionally, after step E3, the third terminal device may send a second response to the first relay device. For specific content, refer to step N5. Details are not described herein again.

E4: The first terminal device sends a third request to the first relay device.

The third request is used to request to establish an end-to-end unicast connection between the first terminal device and the third terminal device.

E5: The first relay device sends the third request to the third terminal device.

For specific content of steps E4 and E5, refer to steps N6 and N7. Details are not described herein again.

Optionally, after step E5, after receiving a third response from the third terminal device, the first relay device may send the third response to the first terminal device. The third response indicates that the unicast connection between the first terminal device and the third terminal device has been established via the first relay device. For specific content of the third response, refer to step N8. Details are not described herein again.

Optionally, if the unicast connection has been established between the first terminal device and the first relay device after S402, step E1 is an optional step. In this case, the first terminal device may send the indication information of the target service to the first relay device. If the unicast connection has been established between the first relay device and the third terminal device after step E2, step E3 is an optional step.

According to the method, the first terminal device may establish the unicast connection between the first terminal device and the third terminal device via the first relay device, so that transmission of the service data packet can be performed through the unicast connection.

Optionally, the first terminal device and the third terminal device can simultaneously communicate with a plurality of relay devices. In other words, a plurality of indirect paths exist between the first terminal device and the third terminal device. In this case, the first terminal device or the third terminal device may select a path for communication. The following separately describes this by using an example in which there are two indirect paths between the first terminal device and the third terminal device.

The first terminal device may select, by using the following steps F1 to F3, a path to communicate with the third terminal device.

F1: The first relay device sends the third response to the first terminal device. Correspondingly, the first terminal device receives the third response from the first relay device.

The third response may be a response message of the third request in step E4. The third response indicates that a second connection between the first terminal device and the third terminal device is established via the first relay device.

F2: A fourth relay device sends a fourth response to the first terminal device. Correspondingly, the first terminal device receives the fourth response from the fourth relay device.

The fourth relay device can communicate with the third terminal device. The fourth response indicates that a third connection between the first terminal device and the third terminal device is established via the fourth relay device.

Optionally, before step F2, the first terminal device may request to establish the connection between the first terminal device and the third terminal device via the fourth relay device. For specific content, refer to steps E1 to E5. An only difference is that the first relay device is replaced with the fourth relay device.

F3: When signal quality of the second connection is greater than or equal to signal quality of the third connection, the first terminal device selects the first relay device to perform the transmission of the service data packet of the target service. In other words, S404 may include: When the signal quality of the second connection is greater than or equal to the signal quality of the third connection, the first terminal device sends the service data packet of the target service to the first relay device.

The signal quality of the second connection may include signal quality between the first terminal device and the first relay device, and/or signal quality between the third terminal device and the first relay device. The signal quality of the third connection may include signal quality between the first terminal device and the fourth relay device, and/or signal quality between the third terminal device and the fourth relay device. For a manner in which the first terminal device determines the signal quality of the second connection and the signal quality of the third connection, refer to S302. Details are not described herein again.

According to the method, the first terminal device selects the path to communicate with the third terminal device, so that a resource waste can be avoided.

The third terminal device may select, by using the following steps, a path to communicate with the first terminal device.

H1: The first terminal device sends a fourth request to a fourth relay device, where the fourth request is used to request to establish a unicast connection between the fourth relay device and the first terminal device.

H2: The fourth relay device determines, based on the indication information of the target service, the third terminal device from a terminal device that can communicate with the fourth relay device.

H3: The fourth relay device sends a fifth request to the third terminal device, where the fifth request is used to request to establish a unicast connection between the fourth relay device and the third terminal device.

H4: The first terminal device sends a sixth request to the fourth relay device.

The sixth request is used to request to establish an end-to-end unicast connection between the first terminal device and the third terminal device. The fourth response in step F2 may be a response message of the sixth request.

H5: The fourth relay device sends the sixth request to the third terminal device.

For specific content of H1 to H5, refer to E1 to E5. An only difference is that the first relay device is replaced with the fourth relay device, the first request is replaced with the fourth request, the second request is replaced with the fifth request, and the third request is replaced with the sixth request.

An execution sequence of H1 to H5 and E1 to E5 is not limited in this application.

H6: The third terminal device selects the first relay device from the first relay device and the fourth relay device, and sends the third response to the first relay device. For specific content of the third response, refer to step F1. Details are not described herein again.

Optionally, when signal quality of a second connection is greater than or equal to signal quality of a third connection, the third terminal device selects the first relay device from the first relay device and the fourth relay device. The second connection is a connection established between the first terminal device and the third terminal device via the first relay device. The third connection is a connection established between the first terminal device and the third terminal device via the fourth relay device.

The signal quality of the second connection may include signal quality between the first terminal device and the first relay device, and/or signal quality between the third terminal device and the first relay device. The signal quality of the third connection may include signal quality between the first terminal device and the fourth relay device, and/or signal quality between the third terminal device and the fourth relay device.

The third terminal device may detect the signal quality between the third terminal device and the first relay device and the signal quality between the third terminal device and the fourth relay device. The third terminal device may obtain, from the first relay device, information indicating the signal quality between the first terminal device and the first relay device, and obtain, from the fourth relay device, information indicating the signal quality between the first terminal device and the fourth relay device. For specific content, refer to S302 in which the first terminal device separately receives the signal quality indication information from each of the M relay devices. An only difference is that the first terminal device is replaced with the third terminal device. Details are not described herein again.

According to the method, the third terminal device selects the path to communicate with the first terminal device, and the third terminal device may send the third response only to the first relay device, so that signaling overheads can be reduced, and a resource waste can be avoided.

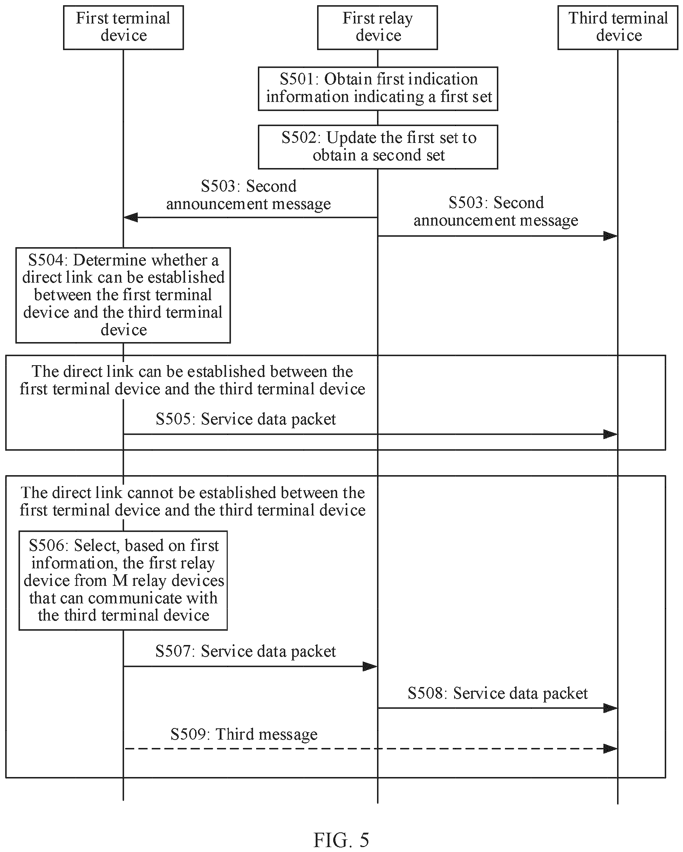

An embodiment of this application further provides a communication method. The method shows a possible implementation of the method shown in FIG. 2 or FIG. 3. The method is applicable to the communication systems shown in FIG. 1A and FIG. 1B. The following describes a procedure of the method in detail with reference to a flowchart shown in FIG. 5.

S501: A first relay device obtains first indication information indicating a first set.

For specific content of S501, refer to S201. Details are not described herein again.

S502: The first relay device updates the first set to obtain a second set.

The first relay device may obtain the second set after determining whether each terminal device in the first set can communicate with the first relay device. The second set may include a terminal device that is in the first set and that can communicate with the first relay device. For specific content of that the first relay device determines whether each terminal device in the first set can communicate with the first relay device, refer to S202. For specific content of the second set, refer to S203. Details are not described herein again.

Optionally, a fourth terminal device is any terminal device in the first set. In a first time period in which the first relay device discovers the fourth terminal device, it may be considered that the first relay device can communicate with the fourth terminal device. In this case, whether the fourth terminal device can communicate with the first relay device may not be determined in the manner in S202. After the first time period in which the first relay device discovers the fourth terminal device, whether the fourth terminal device can communicate with the first relay device may be determined in the manner in S202. For specific content of the first time period, refer to the descriptions of the "first time period" in the method shown in FIG. 2. Details are not described herein again.

In addition, a fifth terminal device is any terminal device in the first set. If a unicast connection exists between the fifth terminal device and the first relay device, the first relay device may determine that the first relay device can communicate with the fifth terminal device.

S503: The first relay device sends a second announcement message.

The second announcement message may include second indication information indicating the second set. For specific content of the second indication information indicating the second set, refer to S203. Details are not repeatedly described.

Optionally, the first relay device may broadcast the second announcement message, to send the second announcement message to a first terminal device and a third terminal device.

In addition, the second announcement message may further include at least one of the following: a type of a discovery message, an RSC, and indication information of the first relay device. For specific content, refer to S102. Details are not described herein again.

Optionally, the first relay device may periodically send the second announcement message, or may send the second announcement message when a specified event is met. For example, the specified event is that a terminal device in the first set changes, that is, a list of terminal devices in proximity is updated. For another example, the specified event is that the first relay device receives, from a terminal device in proximity, a request for requesting to send the second announcement message.

S504: The first terminal device determines whether a direct link can be established between the first terminal device and the third terminal device.

For specific content of S504, refer to S301. Details are not repeatedly described.

In addition, the third terminal device may be a target terminal device, or may be a terminal device that expects to receive a target service.

S505: If the first terminal device determines that the direct link can be established between the first terminal device and the third terminal device, the first terminal device sends, to the third terminal device through the direct link between the first terminal device and the third terminal device, a service data packet to be sent to the third terminal device.

For specific content of S505, refer to S305. Details are not described herein again.

In addition, an execution sequence of S501 to S503 and S504 and S505 is not limited in this application.

S506: If determining that the direct link cannot be established between the first terminal device and the third terminal device, the first terminal device selects, based on first information, the first relay device from M relay devices that can communicate with the third terminal device, where M is a positive integer.

For specific content of S506, refer to S302. Details are not described herein again.

S507: The first terminal device sends, to the first relay device, the service data packet to be sent to the third terminal device.

S508: The first relay device sends, to the third terminal device, the service data packet to be sent to the third terminal device.

For specific content of S507 and S508, refer to S303 and S304. Details are not described herein again.

S509: In S506, if the first terminal device fails to select the first relay device from the M relay devices based on the first information, the first terminal device may send a third message to the third terminal device, where the third message is used to request to establish the direct link between the first terminal device and the third terminal device.

S509 is an optional step. For specific content of S509, refer to step C1. Details are not described herein again.

After the direct link between the first terminal device and the third terminal device is established, the first terminal device may send, to the third terminal device through the direct link between the first terminal device and the third terminal device, the service data packet to be sent to the third terminal device.

According to the method, the first terminal device preferentially selects the direct link between the first terminal device and the third terminal device to perform transmission of the service data packet, so that a transmission delay of the service data packet can be reduced.

In addition, in the method, after checking whether all terminal devices in the first set can communicate with the first relay device, the first relay device sends the second indication information, to indicate the second set including a terminal device that can communicate with the first relay device, so that accuracy of information sent by the first relay device is improved. In this way, the first terminal device can select, based on the accurate second indication information, the first relay device to perform communication between terminal devices, so that communication quality between the terminal devices can be improved.

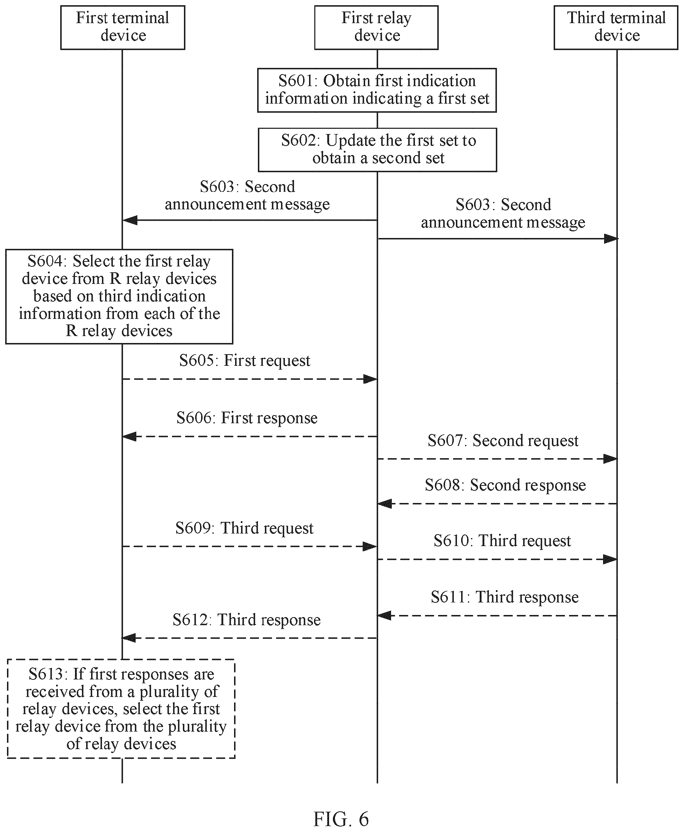

An embodiment of this application further provides a communication method. The method shows a possible implementation of the method shown in FIG. 4. The method is applicable to the communication systems shown in FIG. 1A and FIG. 1B. The following describes a procedure of the method in detail with reference to a flowchart shown in FIG. 6.

S601: A first relay device obtains first indication information indicating a first set.

For specific content of S601, refer to S201. Details are not repeatedly described.

Optionally, the first relay device may further obtain indication information of at least one service, and a service data packet of each of the at least one service is a service data packet that at least one terminal device in the first set expects to receive. For specific content of the indication information of the at least one service, refer to the third indication information in S401. Details are not described herein again.

S602: The first relay device updates the first set to obtain a second set.

For specific content of S602, refer to S502. Details are not described herein again.

S603: The first relay device sends a second announcement message.

The second announcement message may include the third indication information. The third indication information indicates at least one service, and a service data packet of each of the at least one service is a service data packet that at least one terminal device that can communicate with the first relay device expects to receive. For specific content of the third indication information, refer to S401. Details are not described herein again.

Optionally, in the manner in S601 to S603, a first terminal device may receive third indication information from each of R relay devices. The third indication information from each of the R relay devices may indicate the at least one service, and the service data packet of each of the at least one service is a service data packet that at least one terminal device that can communicate with each relay device expects to receive. R is a positive integer.

S604: The first terminal device selects the first relay device from the R relay devices based on the third indication information from each of the R relay devices.

For specific content of S604, refer to S402. Details are not described herein again.

S605: The first terminal device sends a first request to the first relay device, where the first request is used to request to establish a unicast connection between the first relay device and the first terminal device.

S606: The first relay device sends a first response to the first terminal device, where the first response indicates that the unicast connection between the first relay device and the first terminal device has been established.

S607: The first relay device sends a second request to a third terminal device, where the second request is used to request to establish a unicast connection between the first relay device and the third terminal device.

Optionally, if a plurality of terminal devices that can be connected to the first relay device all expect to receive a service data packet of a target service, the first relay device may send the second request to each of the plurality of terminal devices. In this way, the first relay device may establish a connection to each of the plurality of terminal devices.

S608: The third terminal device sends a second response to the first relay device, where the second response indicates that the unicast connection between the first relay device and the third terminal device has been established.

S609: The first terminal device sends a third request to the first relay device, where the third request is used to request to establish an end-to-end unicast connection between the first terminal device and the third terminal device.

S610: The first relay device sends the third request to the third terminal device.

S611: The third terminal device sends a third response to the first relay device, where the third response indicates that the unicast connection between the first terminal device and the third terminal device has been established via the first relay device.

S612: The first relay device sends the third response to the first terminal device.

For specific content of S605 to S612, refer to steps E1 to E5. Details are not described herein again.

Through S605 to S612, the first terminal device establishes the end-to-end unicast connection between the first terminal device and the third terminal device via the first relay device.

It should be understood that the first relay device is used as an example for description in S605 to S612. Alternatively, the connection between the first terminal device and the third terminal device may be established via another relay device in a similar manner.

S613: If the first terminal device receives third responses from a plurality of relay devices, the first terminal device selects the first relay device from the plurality of relay devices. In other words, when a plurality of indirect paths exist between the first terminal device and the third terminal device, the first terminal device may select a path for communication.

For a manner in which the first terminal device selects the path for communication, refer to steps F1 to F3. Details are not described herein again.

Optionally, when a plurality of indirect paths exist between the first terminal device and the third terminal device, in S611, the third terminal device may select a path for communication. For specific content, refer to steps H1 to H6. Details are not described herein again. In this case, S613 is an optional step.

Optionally, if the third terminal device determines, after S607, that a direct link between the first terminal device and the third terminal device has been established, S608 to S612 are optional steps.

Optionally, if the first terminal device determines, after S604, that a direct link between the first terminal device and the third terminal device has been established, S605 to S613 are optional steps.

According to the method, the first relay device may broadcast the third indication information indicating the at least one service, and the service data packet of each of the at least one service is the service data packet that the at least one terminal device that can communicate with the first relay device expects to receive. In this way, when the first terminal device is to send the service data packet of the target service, the first terminal device may find, based on the third indication information, an appropriate relay device, to forward the service data packet of the target service to a terminal device that expects to receive the service data packet of the target service, so that correct transmission of the service data packet can be ensured.

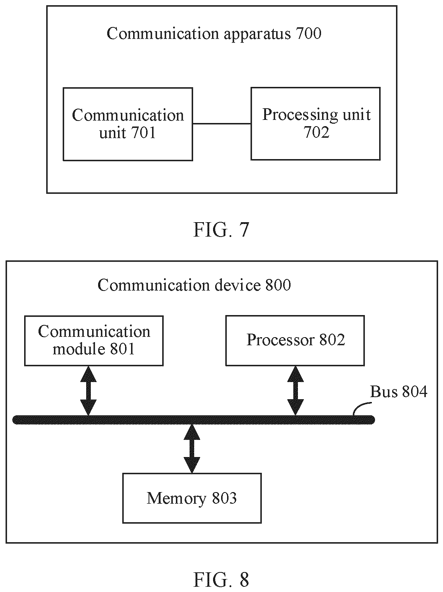

Based on a same inventive concept as the method embodiments in FIG. 2 to FIG. 6, an embodiment of this application provides a communication apparatus shown in FIG. 7, and the communication apparatus may be configured to perform functions of related steps in the foregoing method embodiments. The functions may be implemented by hardware, or may be implemented by software or by hardware executing corresponding software. The hardware or the software includes one or more modules corresponding to the foregoing functions. A structure of the communication apparatus is shown in FIG. 7, and includes a communication unit 701 and a processing unit 702. The communication apparatus 700 may be used in the terminal device in the communication system shown in FIG. 1A, or the relay device or the source terminal device in the communication system shown in FIG. 1B, and may implement the communication method provided in the foregoing embodiments and instances of this application. Functions of units in the communication apparatus 700 are described below.

The communication unit 701 is configured to receive and send data.

Optionally, the communication unit 701 may be implemented by a transceiver, for example, a mobile communication module. The mobile communication module may include at least one antenna, at least one filter, a switch, a power amplifier, a low noise amplifier (low noise amplifier, LNA), and the like. An AN device may communicate with an accessed terminal device via the mobile communication module.

The processing unit 702 may be configured to support the communication apparatus 700 in performing a processing action in the foregoing method embodiments. The processing unit 702 may be implemented by a processor. For example, the processor may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any conventional processor.

In an implementation, the communication apparatus 700 is used in the first relay device in the embodiment of this application shown in FIG. 2 or FIG. 5. The following describes specific functions of the processing unit 702 in this implementation.

The processing unit 702 is configured to: obtain first indication information indicating a first set, where the first set includes at least one terminal device; determine whether each terminal device in the first set can communicate with the first relay device; and send, to a first terminal device via the communication unit 701, second indication information indicating a second set, where the second set includes a terminal device that is in the first set and that can communicate with the first relay device.

Optionally, the processing unit 702 is specifically configured to: if a first message is received from a second terminal device, determine that the second terminal device can communicate with the first relay device; or if no first message is received from a second terminal device, determine that the second terminal device cannot communicate with the first relay device, where the second terminal device is any terminal device in the first set.

Optionally, the first message is at least one of the following:
an announcement message sent by the second terminal device, where the announcement message is used by a communication device other than the second terminal device to discover the second terminal device; and
a response message sent by the second terminal device, where the response message is used to respond to a solicitation message or a direct communication request sent by the first relay device, the solicitation message is used by a communication device other than the first relay device to discover the first relay device, and the direct communication request is used to request to establish a connection between the first relay device and the second terminal device.

Optionally, the processing unit 702 is specifically configured to send, to the first terminal device via the communication unit 701 in a first time period after whether each terminal device in the first set can communicate with the first relay device is determined, the second indication information indicating the second set.

Optionally, each terminal device in the second set has a capability of communicating with a terminal device via a relay device.

Optionally, the processing unit 702 is specifically configured to: before sending, to the first terminal device, the second indication information indicating the second set, obtain capability indication information of each terminal device in the first set, where the capability indication information of each terminal device in the first set indicates whether each terminal device has a capability of communicating with a terminal device via a relay device.

Optionally, signal quality between each terminal device in the second set and the first relay device is greater than or equal to a first threshold.

Optionally, the signal quality between each terminal device in the second set and the first relay device is less than a second threshold, and the second threshold is greater than the first threshold.

Optionally, the processing unit 702 is specifically configured to: after determining whether each terminal device in the first set can communicate with the first relay device, send, via the communication unit 701, information indicating the signal quality between each terminal device in the second set and the first relay device.

Optionally, the first indication information includes indication information of each terminal device in the first set, and the second indication information includes indication information of each terminal device in the second set.

**In** another implementation, the communication apparatus 700 is used in the first terminal device in the embodiment of this application shown in FIG. 3 or FIG. 5. The following describes specific functions of the processing unit 702 in this implementation.

The processing unit 702 is configured to: determine whether a direct link can be established between the first terminal device and a third terminal device; if determining that the direct link cannot be established between the first terminal device and the third terminal device, select, based on first information, a first relay device from M relay devices that can communicate with the third terminal device, where the first information includes signal quality between each of the M relay devices and the first terminal device, and M is a positive integer; and send, to the first relay device via the communication unit 701, a service data packet to be sent to the third terminal device.

Optionally, the processing unit 702 is specifically configured to: if determining that the direct link can be established between the first terminal device and the third terminal device, send the service data packet to the third terminal device via the communication unit 701 through the direct link between the first terminal device and the third terminal device.

Optionally, the processing unit 702 is specifically configured to: when signal quality of a second message from the third terminal device is less than a fifth threshold, determine that the direct link cannot be established between the first terminal device and the third terminal device; or when signal quality of a second message from the third terminal device is greater than or equal to a fifth threshold, determine that the direct link can be established between the first terminal device and the third terminal device.

Optionally, signal quality between the first relay device and the first terminal device is greater than or equal to a third threshold; and/or the first relay device is a relay device that is in the M relay devices and that has highest signal quality with the first terminal device.

Optionally, the first information further includes signal quality between each of the M relay devices and the third terminal device.

The signal quality between the first relay device and the first terminal device is greater than or equal to the third threshold, and signal quality between the first relay device and the third terminal device is greater than or equal to a fourth threshold;
the first relay device is the relay device that is in the M relay devices and that has highest signal quality with the first terminal device, and signal quality between the first relay device and the third terminal device is greater than or equal to a fourth threshold;
the signal quality between the first relay device and the first terminal device is greater than or equal to the third threshold, and the first relay device is a relay device that is in the M relay devices and that has highest signal quality with the third terminal device; or
the first relay device is the relay device that is in the M relay devices and that has highest signal quality with the first terminal device, and the first relay device is a relay device that is in the M relay devices and that has highest signal quality with the third terminal device.

Optionally, the processing unit 702 is specifically configured to: before selecting, based on the first information, the first relay device from the M relay devices that can communicate with the third terminal device, separately receive signal quality indication information from each of the M relay devices via the communication unit 701, where the signal quality indication information from each of the M relay devices indicates the signal quality between each relay device and the third terminal device.

Optionally, the first information further includes a connection status between each of the M relay devices and the first terminal device, and a unicast connection has been established between the first relay device and the first terminal device.

Optionally, the processing unit 702 is specifically configured to: before selecting, based on the first information, the first relay device from the M relay devices that can communicate with the third terminal device, separately receive indication information from each of N relay devices via the communication unit 701, where the indication information from each of the N relay devices indicates at least one terminal device that can communicate with each relay device, and N is a positive integer; and determine, based on indication information from the N relay devices, the M relay devices that are in the N relay devices and that can communicate with the third terminal device.

Optionally, the processing unit 702 is specifically configured to: when the first terminal device fails to select the first relay device from the M relay devices based on the first information, send a third message to the third terminal device via the communication unit 701, where the third message is used to request to establish the direct link between the first terminal device and the third terminal device.

Optionally, the processing unit 702 is specifically configured to: when a connection between the first terminal device and a second relay device is interrupted, or a connection between the third terminal device and a second relay device is interrupted, select, based on the first information, the first relay device from the M relay devices that can communicate with the third terminal device.

Optionally, the processing unit 702 is specifically configured to: before selecting, based on the first information, the first relay device from the M relay devices that can communicate with the third terminal device, when the connection between the first terminal device and the second relay device is interrupted, or the connection between the third terminal device and the second relay device is interrupted, release a first connection between the first terminal device and the third terminal device, where the first connection is an end-to-end connection between the first terminal device and the third terminal device.

In still another implementation, the communication apparatus 700 is used in the first relay device in the embodiment of this application shown in FIG. 4 or FIG. 6. The following describes specific functions of the processing unit 702 in this implementation.

The processing unit 702 is configured to: send third indication information to a first terminal device via the communication unit 701, where the third indication information indicates at least one service, and a service data packet of each of the at least one service is a service data packet that at least one terminal device that can communicate with the first relay device expects to receive; receive a service data packet of a target service from the first terminal device via the communication unit 701, where the at least one service includes the target service; and send the service data packet of the target service to a third terminal device via the communication unit 701, where the third terminal device is a terminal device that is in P terminal devices that can communicate with the first relay device and that expects to receive the service data packet of the target service, and P is a positive integer.

Optionally, before receiving the service data packet of the target service from the first terminal device, the processing unit 702 is specifically configured to: receive a first request from the first terminal device via the communication unit 701, where the first request is used to request to establish a unicast connection between the first relay device and the first terminal device, and the first request includes indication information of the target service; determine the third terminal device from the P terminal devices based on the indication information of the target service; send a second request to the third terminal device via the communication unit 701, where the second request is used to request to establish a unicast connection between the first relay device and the third terminal device; receive a third request from the first terminal device via the communication unit 701, where the third request is used to request to establish an end-to-end unicast connection between the first terminal device and the third terminal device; and send the third request to the third terminal device via the communication unit 701.

Optionally, the processing unit 702 is specifically configured to: before sending the third indication information to the first terminal device, separately receive indication information from each of the P terminal devices via the communication unit 701, where the indication information of each of the P terminal devices indicates Q services, a service data packet of each of the Q services is a service data packet that each terminal device expects to receive, and Q is a positive integer.

In yet another implementation, the communication apparatus 700 is used in the first terminal device in the embodiment of this application shown in FIG. 4 or FIG. 6. The following describes specific functions of the processing unit 702 in this implementation.

The processing unit 702 is configured to: separately receive third indication information from each of R relay devices via the communication unit 701, where the third indication information from each of the R relay devices indicates at least one service, a service data packet of each of the at least one service is a service data packet that at least one terminal device that can communicate with each relay device expects to receive, and R is a positive integer; select a first relay device from the R relay devices based on the third indication information from each of the R relay devices, where the first relay device can communicate with a third terminal device that expects to receive a service data packet of a target service; and send the service data packet of the target service to the first relay device via the communication unit 701.

Optionally, the R relay devices further include a fourth relay device, the fourth relay device can communicate with the third terminal device, and the processing unit 702 is specifically configured to: receive a third response from the first relay device via the communication unit 701, where the third response indicates that a second connection between the first terminal device and the third terminal device is established via the first relay device; receive a fourth response from the fourth relay device via the communication unit 701, where the fourth response indicates that a third connection between the first terminal device and the third terminal device is established via the fourth relay device; and when signal quality of the second connection is greater than or equal to signal quality of the third connection, send the service data packet of the target service to the first relay device via the communication unit 701.

It should be noted that, in the foregoing embodiments of this application, division into the modules is an example, is merely logical function division, and may be other division during actual implementation. **In** addition, functional units in embodiments of this application may be integrated into one processing unit, may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the conventional technology, or all or some of the technical solutions may be implemented in the form of a software product. The computer software product is stored in a storage medium and includes several instructions for instructing a computer device (which may be a personal computer, a server, or a network device) or a processor (processor) to perform all or some of the steps of the methods described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same technical concept, an embodiment of this application provides a communication device shown in FIG. 8, and the communication device may be configured to perform related steps in the foregoing method embodiments. The communication device may be used in the terminal device in the communication system shown in FIG. 1A, or the relay device or the source terminal device in the communication system shown in FIG. 1B, may implement the communication method provided in the foregoing embodiments and instances of this application, and has a function of the communication apparatus shown in FIG. 7. As shown in FIG. 8, a communication device 800 includes a communication module 801, a processor 802, and a memory 803. The communication module 801, the processor 802, and the memory 803 are connected to each other.

Optionally, the communication module 801, the processor 802, and the memory 803 are connected to each other through a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is for representing the bus in FIG. 8, but this does not mean that there is only one bus or only one type of bus.

The communication module 801 is configured to receive and send data, to implement communication interaction with another device. For example, the communication module 801 may be implemented through a physical interface, a communication module, a communication interface, or an input/output interface.

The processor 802 may be configured to support the communication device 800 in performing a processing action in the foregoing method embodiments. When the communication device 800 is configured to implement the foregoing method embodiment, the processor 802 may be further configured to implement a function of the foregoing processing unit 702. The processor 802 may be a CPU, or may be another general-purpose processor, a DSP, an ASIC, an FPGA or another programmable logic device, a transistor logic device, a hardware component, or any combination thereof. The general-purpose processor may be a microprocessor or any conventional processor.

In an implementation, the communication device 800 is used in the first relay device in the embodiment of this application shown in FIG. 2 or FIG. 5. The processor 802 is specifically configured to: obtain first indication information indicating a first set, where the first set includes at least one terminal device; determine whether each terminal device in the first set can communicate with the first relay device; and send, to a first terminal device via the communication module 801, second indication information indicating a second set, where the second set includes a terminal device that is in the first set and that can communicate with the first relay device.

In another implementation, the communication device 800 is used in the first terminal device in the embodiment of this application shown in FIG. 3 or FIG. 5. The processor 802 is specifically configured to: determine whether a direct link can be established between the first terminal device and a third terminal device; if determining that the direct link cannot be established between the first terminal device and the third terminal device, select, based on first information, a first relay device from M relay devices that can communicate with the third terminal device, where the first information includes signal quality between each of the M relay devices and the first terminal device, and M is a positive integer; and send, to the first relay device via the communication module 801, a service data packet to be sent to the third terminal device.

In still another implementation, the communication device 800 is used in the first relay device in the embodiment of this application shown in FIG. 4 or FIG. 6. The processor 802 is specifically configured to: send third indication information to a first terminal device via the communication module 801, where the third indication information indicates at least one service, and a service data packet of each of the at least one service is a service data packet that at least one terminal device that can communicate with the first relay device expects to receive; receive a service data packet of a target service from the first terminal device via the communication module 801, where the at least one service includes the target service; and send the service data packet of the target service to a third terminal device via the communication module 801, where the third terminal device is a terminal device that is in P terminal devices that can communicate with the first relay device and that expects to receive the service data packet of the target service, and P is a positive integer.

In yet another implementation, the communication device 800 is used in the first terminal device in the embodiment of this application shown in FIG. 4 or FIG. 6. The processor 802 is specifically configured to: separately receive third indication information from each of R relay devices via the communication module 801, where the third indication information from each of the R relay devices indicates at least one service, a service data packet of each of the at least one service is a service data packet that at least one terminal device that can communicate with each relay device expects to receive, and R is a positive integer; select a first relay device from the R relay devices based on the third indication information from each of the R relay devices, where the first relay device can communicate with a third terminal device that expects to receive a service data packet of a target service; and send the service data packet of the target service to the first relay device via the communication module 801.

For a specific function of the processor 802, refer to the descriptions in the communication method provided in the foregoing embodiments and instances of this application, and the specific function descriptions of the communication apparatus 700 in the embodiment of this application shown in FIG. 7. Details are not described herein again.

The memory 803 is configured to store program instructions, data, and the like. Specifically, the program instructions may include program code, and the program code includes computer operation instructions. The memory 803 may include a RAM, and may further include a non-volatile memory (non-volatile memory), for example, at least one magnetic disk storage. The processor 802 executes the program instructions stored in the memory 803, and implements the foregoing function by using the data stored in the memory 803, to implement the communication method provided in the foregoing embodiments of this application.

It may be understood that the memory 803 in FIG. 8 of this application may be a volatile memory or a non-volatile memory, or may include both a volatile memory and a non-volatile memory. The non-volatile memory may be a ROM, a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a RAM, and is used as an external cache. By way of example rather than limitative description, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that the memory of the systems and methods described in this specification includes but is not limited to these and any memory of another proper type.

Based on the foregoing embodiments, an embodiment of this application further provides a computer program. When the computer program is run on a computer, the computer is enabled to perform the method provided in the foregoing embodiments.

Based on the foregoing embodiments, an embodiment of this application further provides a computer-readable storage medium. The computer-readable storage medium stores a computer program. When the computer program is executed by a computer, the computer is enabled to perform the method provided in the foregoing embodiments.

The storage medium may be any usable medium that can be accessed by the computer. The following provides an example but does not impose a limitation: The computer-readable medium may include a RAM, a ROM, an EEPROM, a CD-ROM or another compact disc storage, a magnetic disk storage medium or another magnetic storage device, or any other medium that can be used to carry or store expected program code in a form of instructions or a data structure and that can be accessed by the computer.

Based on the foregoing embodiments, an embodiment of this application further provides a chip. The chip is configured to read a computer program stored in a memory, to implement the method provided in the foregoing embodiments.

Based on the foregoing embodiments, an embodiment of this application provides a chip system. The chip system includes a processor, configured to support a computer apparatus in implementing functions of the devices in the foregoing embodiments. In a possible design, the chip system further includes a memory, and the memory is configured to store a program and data that are necessary for the computer apparatus. The chip system may include a chip, or may include a chip and another discrete component.

In conclusion, embodiments of this application provide a communication method and apparatus, and a device. In the method, after determining whether each terminal device in a first set can communicate with a first relay device, the first relay device may send, to a first terminal device, second indication information indicating a second set, where the second set includes a terminal device that is in the first set and that can communicate with the first relay device. According to the method, accuracy of information sent by the first relay device may be improved. In this way, the first terminal device can select, based on the accurate second indication information, the first relay device to perform communication between terminal devices, so that communication quality between the terminal devices can be improved.

In embodiments of this application, unless otherwise stated or there is a logic conflict, terms and/or descriptions in different embodiments are consistent and may be mutually referenced, and technical features in different embodiments may be combined based on an internal logical relationship thereof, to form new embodiments.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a magnetic disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each procedure and/or each block in the flowcharts and/or the block diagrams and a combination of a procedure and/or a block in the flowcharts and/or the block diagrams. These computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

The computer program instructions may alternatively be loaded onto the computer or the another programmable data processing device, so that a series of operations and steps are performed on the computer or the another programmable device, to generate computer-implemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

## Claims

1. A communication method, applied to a first relay device, wherein the method comprises:
obtaining first indication information indicating a first set, wherein the first set comprises at least one terminal device;
determining whether each terminal device in the first set can communicate with the first relay device; and
sending, to a first terminal device, second indication information indicating a second set, wherein the second set comprises a terminal device that is in the first set and that can communicate with the first relay device.

2. The method according to claim 1, wherein the determining whether each terminal device in the first set can communicate with the first relay device comprises:
if a first message is received from a second terminal device, determining that the second terminal device can communicate with the first relay device; or if no first message is received from a second terminal device, determining that the second terminal device cannot communicate with the first relay device, wherein the second terminal device is any terminal device in the first set.

3. The method according to claim 2, wherein the first message is at least one of the following:
an announcement message sent by the second terminal device, wherein the announcement message is used by a communication device other than the second terminal device to discover the second terminal device; and
a response message sent by the second terminal device, wherein the response message is used to respond to a solicitation message or a direct communication request sent by the first relay device, the solicitation message is used by a communication device other than the first relay device to discover the first relay device, and the direct communication request is used to request to establish a connection between the first relay device and the second terminal device.

4. The method according to any one of claims 1 to 3, wherein the sending, to a first terminal device, second indication information indicating a second set comprises:
sending, to the first terminal device in a first time period after whether each terminal device in the first set can communicate with the first relay device is determined, the second indication information indicating the second set.

5. The method according to any one of claims 1 to 4, wherein each terminal device in the second set has a capability of communicating with a terminal device via a relay device.

6. The method according to claim 5, wherein before the sending, to a first terminal device, second indication information indicating a second set, the method further comprises:
obtaining capability indication information of each terminal device in the first set, wherein the capability indication information of each terminal device in the first set indicates whether each terminal device has a capability of communicating with a terminal device via a relay device.

7. The method according to any one of claims 1 to 6, wherein signal quality between each terminal device in the second set and the first relay device is greater than or equal to a first threshold.

8. The method according to claim 7, wherein the signal quality between each terminal device in the second set and the first relay device is less than a second threshold, and the second threshold is greater than the first threshold.

9. The method according to any one of claims 1 to 8, wherein after the determining whether each terminal device in the first set can communicate with the first relay device, the method further comprises:
sending information indicating the signal quality between each terminal device in the second set and the first relay device.

10. The method according to any one of claims 1 to 9, wherein the first indication information comprises indication information of each terminal device in the first set, and the second indication information comprises indication information of each terminal device in the second set.

11. A communication method, applied to a first terminal device, wherein the method comprises:
determining whether a direct link can be established between the first terminal device and a third terminal device;
if determining that the direct link cannot be established between the first terminal device and the third terminal device, selecting, based on first information, a first relay device from M relay devices that can communicate with the third terminal device, wherein the first information comprises signal quality between each of the M relay devices and the first terminal device, and M is a positive integer; and
sending, to the first relay device, a service data packet to be sent to the third terminal device.

12. The method according to claim 11, wherein the method further comprises:
if determining that the direct link can be established between the first terminal device and the third terminal device, sending the service data packet to the third terminal device through the direct link between the first terminal device and the third terminal device.

13. The method according to claim 11 or 12, wherein the determining whether a direct link can be established between the first terminal device and a third terminal device comprises:
when signal quality of a second message from the third terminal device is less than a fifth threshold, determining that the direct link cannot be established between the first terminal device and the third terminal device; or
when signal quality of a second message from the third terminal device is greater than or equal to a fifth threshold, determining that the direct link can be established between the first terminal device and the third terminal device.

14. The method according to any one of claims 11 to 13, wherein
signal quality between the first relay device and the first terminal device is greater than or equal to a third threshold; and/or
the first relay device is a relay device that is in the M relay devices and that has highest signal quality with the first terminal device.

15. The method according to any one of claims 11 to 14, wherein the first information further comprises signal quality between each of the M relay devices and the third terminal device; and
the signal quality between the first relay device and the first terminal device is greater than or equal to the third threshold, and signal quality between the first relay device and the third terminal device is greater than or equal to a fourth threshold; or
the first relay device is the relay device that is in the M relay devices and that has highest signal quality with the first terminal device, and signal quality between the first relay device and the third terminal device is greater than or equal to a fourth threshold; or
the signal quality between the first relay device and the first terminal device is greater than or equal to the third threshold, and the first relay device is a relay device that is in the M relay devices and that has highest signal quality with the third terminal device; or
the first relay device is the relay device that is in the M relay devices and that has highest signal quality with the first terminal device, and the first relay device is a relay device that is in the M relay devices and that has highest signal quality with the third terminal device.

16. The method according to claim 15, wherein before the selecting, based on first information, a first relay device from M relay devices that can communicate with the third terminal device, the method further comprises:
separately receiving signal quality indication information from each of the M relay devices, wherein the signal quality indication information from each of the M relay devices indicates the signal quality between each relay device and the third terminal device.

17. The method according to any one of claims 11 to 16, wherein the first information further comprises a connection status between each of the M relay devices and the first terminal device, and a unicast connection has been established between the first relay device and the first terminal device.

18. The method according to any one of claims 11 to 17, wherein before the selecting, based on first information, a first relay device from M relay devices that can communicate with the third terminal device, the method further comprises:
separately receiving indication information from each of N relay devices, wherein the indication information from each of the N relay devices indicates at least one terminal device that can communicate with each relay device, and N is a positive integer; and
determining, based on indication information from the N relay devices, the M relay devices that are in the N relay devices and that can communicate with the third terminal device.

19. The method according to any one of claims 11 to 18, wherein the method further comprises:
when the first terminal device fails to select the first relay device from the M relay devices based on the first information, sending a third message to the third terminal device, wherein the third message is used to request to establish the direct link between the first terminal device and the third terminal device.

20. The method according to any one of claims 11 to 19, wherein the selecting, based on first information, a first relay device from M relay devices that can communicate with the third terminal device comprises:
when a connection between the first terminal device and a second relay device is interrupted, or a connection between the third terminal device and a second relay device is interrupted, selecting, based on the first information, the first relay device from the M relay devices that can communicate with the third terminal device.

21. The method according to claim 20, wherein before the selecting, based on the first information, the first relay device from the M relay devices that can communicate with the third terminal device, the method further comprises:
when the connection between the first terminal device and the second relay device is interrupted, or the connection between the third terminal device and the second relay device is interrupted, releasing a first connection between the first terminal device and the third terminal device, wherein the first connection is an end-to-end connection between the first terminal device and the third terminal device.

22. A communication apparatus, comprising a communication unit and a processing unit, wherein
the communication unit is configured to input and/or output signaling or data; and
the processing unit is configured to perform, via the communication unit, the method according to any one of claims 1 to 10, or the method according to any one of claims 11 to 21.

23. A communication device, comprising a communication module and a processor, wherein
the communication module is configured to input and/or output signaling or data; and
the processor is configured to execute a computer-executable program, to perform the method according to any one of claims 1 to 10, or perform the method according to any one of claims 11 to 21.

24. A computer-readable storage medium, wherein the computer-readable storage medium stores computer-executable instructions, and when the computer-executable instructions are invoked by a computer, the method according to any one of claims 1 to 10 is performed, or the method according to any one of claims 11 to 21 is performed.

25. A chip, wherein the chip is coupled to a memory, and the chip reads a computer program stored in the memory, to perform the method according to any one of claims 1 to 10, or perform the method according to any one of claims 11 to 21.

26. A communication system, comprising a communication apparatus configured to perform the method according to any one of claims 1 to 10 and a communication apparatus configured to perform the method according to any one of claims 11 to 21.
